# EUROPÄISCHE PATENTSCHRIFT

(11) **EP 1 979 277 B1**
(45) Veröffentlichungstag und Bekanntmachung des Hinweises auf die Patenterteilung: **12.03.2014**
(21) Anmeldenummer: 07702930.4
(22) Anmeldetag: 22.01.2007
(51) Int. Cl.: C03B 5/44, C03B 5/225, C03B 5/03, C03B 5/185, H05B 3/03, F27D 1/12, F27D 11/04, C03B 5/182

(54) **VERFAHREN UND VORRICHTUNG ZUM LÄUTERN EINER GLASSCHMELZE**
METHOD AND APPARATUS FOR FINING MOLTEN GLASS
PROCÉDÉ ET DISPOSITIF D'AFFINAGE DE VERRE FONDU

(30) Priorität: 24.01.2006 DE 102006003535
(43) Veröffentlichungstag der Anmeldung: 15.10.2008
(73) Patentinhaber: Schott AG, 55122 Mainz (DE)
(72) Erfinder: GROSS, Andreas, 55278 Undenheim (DE); RÖMER, Hildegard, 65439 Flörsheim (DE); GREULICH-HICKMANN, Norbert, 55127 Mainz (DE); RÄKE, Guido, 55546 Pfaffen-Schwabenheim (DE); WEIDMANN, Günter, 55237 Flonheim (DE); STELLE, Thomas, 55118 Mainz (DE); OHMSTEDE, Volker, 55411 Bingen (DE); JOST, Wolfgang, 55126 Mainz (DE)
(74) Vertreter: Herden, Andreas F.
(86) Internationale Anmeldenummer: PCT/EP2007/000509
(87) Internationale Veröffentlichungsnummer: WO 2007/085398

(56) Entgegenhaltungen:
- EP-A- 1 055 645
- EP-A- 1 484 770
- EP-A1- 0 019 007
- WO-A-2004/052054
- BE-A1- 894 795
- US-A- 4 246 433
- US-A- 5 643 350

## Beschreibung

Die Erfindung betrifft ein Verfahren zum Läutern von Schmelzen. Die Erfindung betrifft zudem eine Vorrichtung zur zum Läutern von Schmelzen.

Im ersten Prozeßschritt bei der Herstellung von Gläsern wird die Ausgangssubstanz, das sogenannte Glasgemenge eingeschmolzen. Das Einschmelzen findet in Wannen statt und ist in der Regel aufgrund der thermischen Belastbarkeit des Wandmaterials auf Schmelztemperaturen bis 1650°C beschränkt. Nachdem das Gemenge mit ansteigender Temperatur flüssig geworden ist, beginnt im Glas ein Homogenisierungsprozess einzusetzen, das heisst, es findet eine Durchmischung aller Ausgangssubstanzen statt.

Nachdem das Gemenge zur Erzeugung einer Glasschmelze erhitzt worden ist, beginnt in der Regel in einem zweiten Prozeßschritt die Läuterung. Diese kann in einer sogenannten Läuterkammer durchgeführt werden. In der Läuterkammer wird die Schmelze zum Verbessern der Homogenität und zum Entfernen von Blasen gründlich durchmischt und entgast. Ein wesentliches Ziel bei der Läuterung ist es, die physikalisch und chemisch in der Schmelze gebundenen Gase freizusetzen und zu entfernen.

Für die Gute von Gläsern, insbesondere von Displayglasern entscheidende Merkmale sind unter Anderem ein Minimum an Blaseneinschlüssen in dem Glas, ein Minimum an verfarbenden Einschlüssen und ein Minimum an gesundheits- bzw. ökologisch bedenklichen Substanzen, wie beispielsweise Arsen.

Ein Ansatzpunkt, um die Läuterung der Glasschmelze zu verbessern und die erforderliche Lauterzeit zu verringern, liegt in der Verwendung möglichst hoher Lautertemperaturen. Durch eine Temperaturerhöhung wird unter anderem die Viskosität der Glasschmelze herabgesetzt und die Aufstiegsgeschwindigkeit der in der Schmelze befindliche Blasen erhöht.

Ein weiterer Ansatzpunkt liegt in der Verwendung von sogenannten Lautermitteln. Das Prinzip dieser Lautermittel liegt darin, dem geschmolzenen Gemenge, insbesondere dem geschmolzenen Glas, Substanzen zuzusetzen, welche sich bei hohen Temperaturen unter Gasabgabe bzw. Sauerstofffreisetzung zersetzen. Die von den Läutermitteln freigesetzten Gase "sammeln" die in der Schmelze befindlichen Gase auf, dadurch entstehen sich mit zunehmendem Läutern vergroßernde Blasen, welche schneller an die Oberflache der Schmelze aufsteigen und somit die Schmelze verlassen.

Die Auswahl des Lautermittels richtet sich in erster Linie nach der Temperatur der Glasschmelze wahrend der Läuterung. Während das Lautermittel Arsenpentoxid As₂O₅ bereits bei Temperaturen oberhalb von 1250°C in As₂O₃ und Sauerstoff zerfällt, zersetzt sich das Hochtemperaturlautermittel SnO₂ erst bei Temperaturen oberhalb 1500°C in SnO und ½ O₂. Die entstandenen Oxide verbleiben in der Schmelze und sind im Glasendprodukt nachzuweisen. Darin vorhandenes Arsen ist insbesondere dann von Nachteil, wenn ökologisch unbedenkliche Glaser gewunscht sind. Es besteht daher Bedarf an Möglichkeiten zur Läuterung bei sehr hohen Temperaturen, das heisst bei Temperaturen > 1650°C, um die Läuterung effizienter durchführen zu können. Eine derartige Temperaturerhöhung ist jedoch nach herkömmlichen Verfahren nur und in bekannten Vorrichtungen mit großen Nachteilen, insbesondere durch verstärkte Korrosion der feuerfesten Auskleidungen verbunden.

Die Beheizung der Glasschmelze erfolgt herkömmlich durch Öl- oder Gasbrenner, die sich im Oberofen befinden. Die Warme wird hierbei über die Glasbadoberflache eingebracht. Als zusatzliche Beheizung findet, insbesondere bei gering absorbierenden Gläsern, eine zusatzliche elektrische Beheizung durch Elektroden statt. Dazu wird die Glasschmelze konduktiv mit Wechselstrom beheizt, das heisst sie wird direkt über den Jouleschen Effekt beheizt. Die Elektroden sind zu diesem Zwecke am Boden oder den Seitenwanden des Gefäßes befestigt und stehen mit der Glasschmelze in direktem Kontakt.

Als Elektodenmaterial finden vor allem Molybdän, Platin und Metalle der Platingruppe Verwendung Bei der herkömmlichen Betriebsweise beziehungsweise in bekannten Vorrichtungen sind jedoch auch diese Materialien einer etwaigen Korrosion ausgesetzt. Molybdanelektroden neigen sehr stark zur Oxidation. Sie mussen daher wahrend des Anfahrprozesses durch eine Inertgasatmosphare geschützt werden. Ebenfalls können in der Schmelze befindliche Verbindungen, wie beispielsweise As₂O₅, Molybdän- oder auch Platinelektroden angreifen. Im Vergleich zu Elektroden aus Molybdän sind Platinelektroden wesentlich inerter, können aber über langere Zeiträume nur bis zu Temperaturen von 1500°C eingesetzt werden.

In der Druckschrift US 4246433 wird die Verwendung gekühlter, insbesondere wassergekuhlter Stabelektroden beschrieben, welche durch die Seitenwände in ein Schmelzgefaß eingeführt sind. Durch die Wasserkühlung ist die Stabilität der Elektrode gegen Korrosion bei höheren Temperaturen noch gewährleistet, somit können höhere Temperaturen in der Schmelze eingestellt werden, ohne ein Brechen bzw. Verformen der Elektroden in Kauf nehmen zu müssen. Daher wird durch die Kühlung die maximal erreichbare Schmelztemperatur nicht langer durch die Anwendungsgrenztemperatur des Elektrodenmaterials begrenzt.

Durch die Möglichkeit, erhöhte Lautertemperaturen einstellen zu können, oder beim Läutern besonders korrosiver Glaser ergibt sich durch einen verstärkten Angriff auf die Wand des Aggregates jedoch ein erhöhter Materialeintrag in die Glasschmelze und somit auch in das Glasendprodukt. Das meist als Wandmaterial verwendete Platin ist einerseits sehr kostenintensiv, andererseits haben Aggregate aus Platin oder Platinlegierungen den Nachteil, daß sie aufgrund der Korrosivitat und Reibung der Glasschmelzen geringe Mengen an Pt oder anderen Legierungsbestandteilen der Wand in die Schmelze abgeben. Diese liegen dann sowohl in ionischer Form als auch fein verteilt in elementarer Form im Glasendprodukt vor. Dieser Platmeintrag an ionischem oder elementarem Metall in die Glasschmelze kann je nach Konzentration und Teilchengroße im Glasendprodukt zu einer unerwünschten Verfärbung und zu einer verminderten Transmission der elektromagnetischen Strahlung führten.

In dem Dokument DE 19939780 A1 wird die kontinuierliche Läuterung von Gläsern in Aggregaten beschrieben, in denen die Schmelze durch direktes Einkoppeln von Hochfrequenzenergie beheizt wird. Das hierbei verwendete Aggregat besteht aus Kühlkreislaufen, welche für die zur Beheizung der Schmelze verwendete Hochfrequenzstrahlung nahezu "unsichtbar" sind. An diesen gekühlten Wanden des Aggregats erstarrt die Schmelze und bildet eine sogenannte Skullschicht zwischen der Glasschmelze und dem Wandmaterial, die sich immer wieder selbst erneuern kann, aus. Durch die Skullschicht an den meist wassergekühlten Metallrohren wird die Dichtigkeit des Aggregats gewährleistet, darüber hinaus wird der Angriff der Glasschmelze auf die Gefaßwand minimiert, was einen wesentlich geringeren Materialeintrag in die Glasschmelze zur Folge hat.

Ein Vorteil für das Schmelzens mit Hochfrequenz in derartigen Skulltiegeln besteht darin, dass Glasschmelzen auch auf Temperaturen über 1700°C erhitzt werden können, da die Temperaturbeständigkeit der Aggregatwand aufgrund der durch die Kühlung ausgebildeten Skullschicht keinen limitierenden Faktor mehr darstellt. Durch das direkte Einkoppeln der Hochfrequenz in die Glasschmelze kann die Schmelze im Randbereich des Schmelzaggregats kalter sein als in der Mitte. Durch die Skullschicht lassen sich auch hochschmelzende und stark korrosive Glaser einschmelzen und läutern.

Ein weiterer Vorteil beim Hochfrequenzschmelzen oder Schmelzen bei hohen Temperaturen liegt in der Verwundbarkeit sogenannter Hochtemperaturlautermittel. Dies ermöglicht es, auf umweltschadliche und toxische Lautermittel wie As₂O₅ oder Sb₂O₅, wie es in der Druckschrift DE 19939771 beschrieben ist, zu verzichten und statt dessen beispielsweise das weniger bedenkliche SnO₂ als Lautermittel zu verwenden.

Das Beheizen der Schmelze mit Hilfe von Hochfrequenz hat jedoch den Nachteil, dass die zu schmelzenden Gläser, Glaskeramiken, Keramiken oder Kristalle bei der Schmelztemperatur eine ausreichend hohe elektrische Leitfähigkeit aufweisen müssen, damit die mit Hilfe der Hochfrequenz eingetragene Energie großer ist als die über die Skullwande abgeführte Wärmemenge. Die elektrische Leitfähigkeit von Glas- und Glaskeramikschmelzen wird, im Allgemeinen, durch den Alkaligehalt und in geringerem Maße durch die Erdalkali-Anteile dieser Schmelzen bestimmt. Obwohl der Grenzwert der erforderlichen elektrischen Leitfähigkeit auch von einer Reihe apparativer Parameter abhangt, hat es sich in der Praxis herausgestellt, dass die elektrische Leitfähigkeit der Schmelze über 10⁻¹ Ω⁻¹cm⁻¹ liegen sollte.

In Praxisversuchen hat sich jedoch herausgestellt, dass insbesondere die hochschmelzenden Glaser, für welche das Hochfrequenzschmelzen im Skulltiegel aufgrund der hohen Temperaturen besonders geeignet ware, eine zu geringen elektrische Leitfähigkeit, insbesondere von unter 10⁻¹ Ω ⁻¹cm⁻¹ aufweisen. Somit können mit der Hochfrequenzschmelztechnik eine Reihe von wichtigen technischen Gläsern nicht verarbeitet werden.

Zu den Gläsern mit geringer elektrischer Leitfähigkeit und hoher Temperaturbestandigkeit gehören neben Gläsern, welche für Pharmaverpackungen und hochtemperaturbelastbare Lampen benötigt werden, auch Gläser, wie zum Beispiel Display-Glaser, die im weiteren Verarbeitungsprozess beschichten werden. Bei Displaygläsern sind Alkaligehalte in den Gläsern unerwünscht, da diese Metalle leicht aus den Gläsern diffundieren können und so in die funktionellen Schichten des Displays gelangen. Auch diese Gläser besitzen aufgrund des geringen oder nicht vorhandenen Alkaligehalts eine zu geringe elektrische Leitfähigkeit, um gut genug mit der Hochfrequenz anzukoppeln.

In der PCT/EP 03/13353 werden ein Verfahren und eine Vorrichtung zur Beheizung von Schmelzen beschrieben. In dieser Apparatur wird eine Glasschmelze dadurch beheizt, indem ein Strom zwischen zumindest zwei wiederum gekühlten Elektroden fließt, wobei die Elektroden jeweils einen Bestandteil der Wandung des Schmelzgefäßes ersetzen. Die Wandung des Schmelzgefäßes ist in der beschriebenen Vorrichtung zumindest in einem Bereich gekühlt. Nachteilig ist bei der beschriebenen Vorrichtung jedoch, dass die Elektroden zu einem Wärmeentzug führen. Das Anfahren ist zum einen deshalb schwierig, da die Elektroden im unteren Bereich angeordnet sind. Zudem bestehen besonders beim Anfahren der Vorrichtung das Probleme durch Überschläge. Das vollständige Ausbilden einer Skullschicht ist zudem nicht möglich, da diese das Einkoppeln der von den als Teil der Gefäßwandung vorgesehenen Elektroden abgegebenen elektromagnetischen Energie in das Schmelzgut unterbinden würde.

Das Dokument EP 1 484 770 A1 zeigt einen Skulltiegel zum Einschmelzen von Glas mit Elektroden, welche von oben in die Glasschmelze ragen.

Vor diesem Hintergrund liegt der vorliegenden Erfindung die Aufgabe zugrunde, eine Möglichkeit zum Läutern und Reinigen von Schmelzen zur Verfügung zu stellen und dabei die oben erwähnten Nachteile weitestgehend zu vermeiden und ein erleichtertes Anfahren des Vorgangs zur Behandlung der Schmelze zu ermöglichen.

Insbesondere soll eine Möglichkeit zur Verfügung gestellt werden, um einerseits die Wände des Gefäßes ausreichend zu kühlen um einen chemischen Angriff der Schmelze auf diese weitgehend zu verhindern, und andererseits der Schmelze, zumindest mehr Energie zuzuführen, als ihr durch die gekühlten Wände entzogen wird.

Weiterhin soll die Erfindung es ermöglichen, Gläser, kristallisationsempfindliche Gläser, Glaskeramiken, Kristalle, Keramiken und hochzirkonhaltige Gläser schmelzen, läutern und reinigen zu können, wobei die Schmelzen auch Leitfähigkeiten unter 10⁻¹ Ω⁻¹cm⁻¹ aufweisen können.

Die Aufgabe umfasst das Ziel, ein Läutern der Schmelze bei Temperaturen höher als 1700°C zu ermöglichen und den Einsatz von Läutermitteln in der Glasschmelze zumindest zu verringern und insbesondere die Menge an Läutermitteln zu minimieren, um auf toxische Substanzen wie beispielsweise As₂O₅ weitgehend verzichten zu können. Auch soll trotz hoher Temperatur der Eintrag von Ionen aus der Schmelzkontaktfläche der Wand der Vorrichtung minimiert werden.

Außerdem ist es eine Aufgabe der Erfindung, das Läutern der Schmelze derart effizient durchzuführen, dass auch bei hohen Durchsätzen mit einem vergleichsweise geringen Energiebedarf gearbeitet werden kann.

Des Weiteren ist es eine Aufgabe der Erfindung, die Läuter wirkung derart zu verbessern, dass es möglich wird, Ausgangsmaterialien einsetzen zu können, welche eine mindere Qualität, insbesondere eine geringe Reinheit aufweisen.

Zusätzlich soll die Erfindung das Auftreten von Blasen Schlieren, Glas- und Temperaturinhomogenitäten sowie Kurzschlussströmungen zumindest minimieren und wirtschaftlich sein.

Die Aufgabe der Erfindung wird gelöst durch ein Verfahren mit den Merkmalen des Anspruchs 1 sowie durch einen Skulltiegel gemäß Anspruch 5. Vorteilhafte Weiterbildungen finden sich in den jeweils zugeordneten Unteransprüchen.

Die Erfindung stellt ein Verfahren zur Temperaturbeeinflussung einer Schmelze in einer Läutereinheit zur Verfügung, wobei die Schmelze zumindest mittels ohmscher Widerstandsbeheizung beheizt wird, zumindest zwei Elektroden in der Schmelze angeordnet werden, und zumindest ein Teil der Schmelze gekühlt wird.

Durch die Anordnung der zumindest zwei Elektroden in der Schmelze ist vorteilhafterweise die elektromagnetische Energie zum Beheizen der Schmelze besonders leicht an das zu schmelzende Material ankoppelbar. Indem zumindest ein Teil der Schmelze gekühlt wird, welcher beispielsweise in einem die mit dem Verfahren behandelte Schmelze umgebenden Randbereich lokalisiert sein kann, wird vorteilhafterweise die Möglichkeit geschaffen, dort, wo die Schmelze mit Schmelze führenden Bauteilen in Berührung kommen kann, die Temperatur abzusenken, so daß die Gefahr von Korrosion und/oder Eintrag von Bestandteilen derartiger Bauteile in die Schmelze vermindert werden kann. Insbesondere kann in den gekühlten Bereichen der Schmelze eine Kruste aus erstarrtem, der Schmelze arteigenem Material, einer sogenannte Skullschicht, ausgebildet werden, welche ein Gefäß bildet, in welchem die Schmelze behandelt wird. Dann befindet sich die Schmelze vorteilhafterweise in einer Umgebung aus arteigenem Material, in welcher die Gefahr von Verunreinigungen weitestgehend reduziert ist.

Die Erfindung stellt des Weiteren ein Verfahren zum Läutern von Schmelzen in einer Läutereinheit zur Verfügung, wobei die Schmelze zumindest mittels ohmscher Widerstandsbeheizung beheizt wird, und zumindest zwei Elektroden in der Schmelze angeordnet werden und zumindest ein Teil der Schmelze gekühlt wird. In dem zu schmelzenden und/oder geschmolzenen Material können dabei, insbesondere bei erhöhter Temperatur, verschiedene Verfahrensschritte nebeneinander ablaufen. Zum einen können weitere Einschmelzvorgänge stattfinden, zum anderen kann das Läutern der Schmelze erfolgen, wobei neben Gasblasen auch die Produkteigenschaften des späteren Glases negativ beeinflussende Substanzen entfernt werden können, das heisst, dem Läutern kann ein Reinigungsschritt überlagert sein.

Die Erfindung sieht des Weiteren vor, das Verfahren derart durchzuführen, daß die Schmelze in zumindest einer einen Innenraum definierenden Anordnung, insbesondere einem Gefäß bereit gestellt wird, wobei die Anordnung zumindest bereichsweise gekühlt wird. Die Anordnung kann beispielsweise durch Leitungen, insbesondere Rohrleitungen, welche von einem Kühlmittel durchströmt werden können, gebildet werden. Der Begriff "Anordnung" umfaßt damit jeden Aufbau, welcher zumindest zeitweise die Schmelze aufnehmen kann.

Im folgenden wird der Einfachheit halber der Begriff "Gefäß" verwendet, welcher jedoch, wie oben ausgefuhrt, nicht dahingehend zu verstehen ist, die Anordnung sei auf einen Aufbau aus zusammenhängen flachigen Bauteilen beschrankt.

Durch das Anordnen der Elektroden im Innenraum des Gefäßes erhöht sich zudem in vorteilhafter Weise die Kuhlflache der Seitenwände und somit die Kuhlwirkung. Hierdurch werden wahrend des Betriebes die gesamten Seitenwande mit einer Skullschicht bedeckt, wodurch die Gefäßwände vor einem Angriff der Schmelze, und die Schmelze selbst vor Materialeintrag von Seiten der Gefaßwand geschützt werden.

Mit dem erfindungsgemäßen Verfahren können daher besonders hohe Temperaturen in der Schmelze realisiert werden, wobei gleichzeitig ausreichend niedrige Temperaturen an den Gefaßwandungen sichergestellt werden können. Durch das sich einstellende Temperaturprofil entsteht zudem eine vorteilhafte Konvektion im Gefäß, wodurch die in die Schmelze eingebrachte Energie gleichmaßig in das zu schmelzende beziehungsweise geschmolzene Material eingebracht wird. Somit ermöglicht die Erfindung eine energieeffiziente Beeinflussung der Temperatur einer Schmelze.

Durch die Erfindung werden somit die Elektroden als aktive Elemente innerhalb des heißen Bereichs des zu schmelzenden Materials eingesetzt. Der Skull dagegen ist isoliert gegenüber Masse und Elektroden. Dadurch wird die Gefahr von Überschlagen, insbesondere beim Anfahren vermindert. Die Parameter der ohmschen Widerstandsbeheizung können deshalb ohne Gefahr für die eingesetzten Materialien von Gefäß und Elektroden derart gewählt werden, dass auch niederohmige Glaser behandelt werden können. Somit wird es möglich, auch Glaser und ebenso Glaskeramiken und Keramiken zu schmelzen beziehungsweise läutern bzw. zu reinigen, welche eine geringe elektrische Leitfähigkeit aufweisen. Beispielsweise kann die Erfindung eingesetzt werden zur Läuterung von Alumosilikatglas, insbesondere Displayglas und Lampenglas sowie zur Läuterung von Borosilikatglas, insbesondere in der Anwendung für Pharmaverpackungen.

Vorteilhafterweise wird gemäß dem erfindungsgemäßen Verfahren die elektromagnetische Energie zum Beheizen der Schmelze besonders leicht an das zu schmelzende Material angekoppelt. Dadurch können in der Schmelze besonders hohe Temperaturen realisiert werden.

Dies wird möglich durch die Anordnung der zumindest zwei Elektroden im Innenraum des Gefäßes, wodurch sich vorteilhafterweise die Kühlfläche der Seitenwände und somit die Kuhlwirkung auf die Schmelze erhöht. Hierdurch werden während des Betriebs die gesamten Seitenwande mit einer Kruste aus erstarrtem, arteigenem Material bedeckt, wodurch die Gefäßwände vor einem Angriff der Schmelze, und die Schmelze selbst vor Materialeintrag von Seiten der Gefaßwand geschützt werden. Hierdurch werden die gesamten Seitenwände mit einer Kruste aus erstarrtem, arteigenem Material bedeckt.

Die sich wahrend des Betriebs permanent erneuernde Skullschicht vermindert darüber hinaus einen Angriff auf die Wand des Aggregates und reduziert den Materialeintrag in die Glasschmelze und somit auch in das Glasendprodukt. Als Wandmaterial können wegen der Skullschicht in vorteilhafter Weise wesentlich kostengünstigere Materialien wie beispielsweise Kupfer anstelle des sonst häufig verwendeten teuren Platins verwendet werden.

Infolge der besonders hohen Temperaturen im Inneren der Schmelze und der niedrigen Temperaturen im Bereich der Seitenwände bildet sich ein Stromungsprofil durch das Gefäß aus, welches vorteilhafterweise eine homogene Verteilung der eingebrachten Energie in der Schmelze ermöglicht. Weil bei den hohen Temperaturen, welche mit der Erfindung realisiert werden können, und der optimalen Strömung des zu schmelzenden Materials durch die Einrichtung mit Hilfe des erfindungsgemäßen Verfahrens zum Läutern und/oder Reinigen von Schmelzen das Entfernen von Blasen und/oder anderen unerwünschten Substanzen gefordert wird, ist es zudem möglich, deutlich geringere Mengen von Läutermitteln einzusetzen.

Zudem können Hochtemperaturlautermittel, wie z.B. SnO₂ verwendet werden. Dadurch kann der Einsatz herkömmlicher Läutermittel, wie beispielsweise As₂O₅ reduziert werden. Diese herkömmlichen Läutermittel sind insbesondere im Hinblick auf ökologische Glaser nachteilig, denn ihre Reste im Endprodukt können eine toxische Wirkung haben. Es ist somit ein Vorteil der Erfindung, auf energieeffiziente Weise derart hohe Temperaturen erreichen zu können, dass Hochtemperaturlautermittel wie Zinndioxid eingesetzt werden können, welche bei den bisher üblichen niedrigeren Temperaturen ihre Lauterwikung nicht in vollem Maße entfalten können.

Beispielsweise werden bei Displayglas bei Temperaturen bis 1650 °C maximal 50 % des als Läutermittel eingesetzten Zinndioxids umgesetzt. Bei Steigerung der Temperatur bis zu 2000 °C steigt der Umsetzungsgrad bis zu 100 %. Aufgrund dieser Verhaltnisse können die Zinndioxid-Mengen, bei gleicher Wirkung, halbiert werden, was bei diesem sehr teuren Rohstoff einen zusätzlichen wirtschaftlichen Vorteil bringt. Durch niedrige Sn-Gehalte sinkt die Gefahr der Legierungsbildung an Pt-Bauteilen.
Vorteilhafterweise können besonders hohe Temperaturen in der Schmelze dann erreicht werden, wenn zumindest ein Bereich der Schmelze auf eine Temperatur aufgeheizt wird, die oberhalb der Anwendungsgrenztemperatur des Schmelzkontaktmaterials zumindest.einer der Elektroden liegt. Weil gemäß dem erfindungsgemäßen Verfahren das Stromungsprofil durch das Gefäß im Hinblick auf einen gleichmäßigen Energieeintrag in das zu schmelzende Material in vorteilhafter Weise ausgebildet ist, kann auch bei dieser Betriebsweise ein Eintrag des Elektrodenmaterials in die Schmelze derart gering gehalten werden, dass nachteilige Auswirkungen auf das Produkt weitgehend vermieden werden können.

Dies kann weiter dadurch verbessert werden, dass die Elektroden gekühlt werden. Vorteilhafterweise werden erfindungsgemäß die Elektroden separat regelbar und/oder steuerbar und/oder einstellbar gekühlt. Somit ist eine genaue Anpassung der für die jeweilige Elektrode erforderlichen Kuhlleistung an die in ihrer Umgebung herrschenden Temperaturen auf einfache Weise möglich. Des Weiteren kann zudem zumindest ein Elektrodenhalter gekühlt werden. Dies tragt vorteilhafterweise zur weiteren Schonung der Elektroden bei.

Gemäß dem erfindungsgemäßen Verfahren ist es des Weiteren vorgesehen, dass der Boden des Gefäßes zumindest in einem Bereich gekühlt wird. Dadurch bildet sich vorteilhafterweise auch auf dem Bodenbereich eine Skullkruste aus, welche die Korrosion des Bodens beziehungsweise den Eintrag von Bodenmaterial in das zu schmelzende Material vermindert.

Wird der Boden nur bereichweise gekühlte entstehen Bereiche mit unterschiedlicher elektrischer Leitfähigkeit in der Schmelze, welche eine entsprechende Verdrängung des elektrischen Feldes von diesen Bodenbereichen weg nach oben bedingen. Dies ist insbesondere beim Anfahren energetisch günstig, weil dadurch die einzubringende elektromagnetische Energie im oberen Bereich des Gefaßinneren eingekoppelt wird. Beginnt dort der Einschmelzvorgang, sinkt die entstandene Schmelze nach unten ab und durch die einsetzende Umwälzung wird das gewünschte Stromungsprofil durch das Gefäß in Gang gesetzt. Eine Anordnung der Elektroden in der Nähe der Oberflache des einzuschmelzenden Materials unterstutzt an dieser Phase diese Vorgänge.

Die Kühlung kann gemäß der Erfindung durch Hindurchleiten eines Kühlfluids, insbesondere Luft und/oder Wasser, durch zumindest eine Elektrode und/oder zumindest einen Elektrodenhalter und/oder zumindest einen Teil der Gefäßwand und/oder des Bodens auf besonders einfach Weise erfolgen.

Um einen Überschlag zwischen Elektrode und Seitenwand, also einen Stromübergang, welcher außer zu einer Schädigung der Seitenwand zu einem ineffizienten Energieeintrag in die Schmelze fuhren wurde, vorteilhafterweise besonders sicher verhindern zu können, können die Elektroden in einem wahlbaren Abstand zu den gekühlten Seitenwanden angeordnet werden. Dies ist auf einfache Weise dadurch möglich, dass die Elektroden durch den Boden in das Gefäß eingeführt werden. Es ist jedoch auch denkbar, Elektroden durch die Seitenwände in das Gefäß einzuführen.

Insbesondere durch die Anordnung der Elektroden im Boden kann der Eintritt der Elektrode in einen relativ kalten Bereich gelegt werden, wo die elektrische Leitfähigkeit der umgebenden Schmelze entsprechend gering ist, so dass die Elektrode nahezu elektrisch isoliert gegenüber den Gefaßwandungen ist. Vorteilhafterweise wird das erfindungsgemäße Verfahren daher derart durchgeführt, dass die Elektroden im Wesentlichen ohne direkten elektrischen Kontakt zu den gekühlten Begrenzungsflächen des Gefäßes in das Gefäß eingebracht werden.

Werden zum Beispiel die Elektroden durch den Boden eingeführt, kann die Elektrodenhohe im Gefäß so gewählt werden, dass das erstmalige Zünden der Elektroden in Abhängigkeit von der Leitfähigkeit der Schmelze vereinfacht wird.

Um das zu schmelzende Material im Inneren des Gefäßes im Hinblick auf die Temperaturverteilung und/oder das Strömungsprofil optimiert beheizten zu können, sieht die Erfindung vor, dass zumindest eine Elektrode wahrend der Durchführung des Verfahrens in das Gefäß hineingeschoben und/oder aus dem Gefäß herausgezogen wird. Dadurch wird die Position der Elektrode im Inneren des Gefäßes verändert und es ändern sich die Positionen der Stellen, an welchen elektromagnetische Energie in das zu schmelzende Material eingebracht wird. Durch Wahl der Geschwindigkeit und der Anfangs- sowie Endpunkte der Bewegung des Hineinschiebens oder Herausziehens von Elektroden stehen damit auf einfache Weise weitere Parameter zur Temperaturbeeinflussung und/oder zur Beeinflussung des Stromungsprofils im Innern des Gefäßes zur Verfugung.

Dabei wird vorteilhafterweise von der Erkenntnis Gebrauch gemacht, dass die im Innern des Gefäßes angeordneten Elektroden je nach Anzahl, Form, Große und Positionierung die Strömung des zu schmelzenden Materials durch das Gefäß beeinflussen. Zudem kann durch Wahl dieser Parameter die Verteilung der insgesamt in die Schmelze eingebrachten Energie gezielt gesteuert werden. So kann insbesondere beim Anfahren ein größerer Anteil der insgesamt eingebrachten Energie im oberen Bereich der Schmelze, wo sich besonders viel noch nicht eingeschmolzenes Material ansammelt, eingebracht werden, wobei im weiteren Verlauf der Durchführung des Verfahrens die Position der Elektroden im Hinblick auf eine homogene Energieverteilung und/oder eine im Hinblick auf das Strömungsprofil durch das Gefäß optimierte Energieverteilung eingestellt werden kann. Durch diese vorteilhaften Variationsmöglichkeiten wird zum einen das Anfahren deutlich erleichtert, während gleichzeitig zum anderen ein im Hinblick auf die Energieausnutzung günstiges Verfahren bereitgestellt wird.

Besonders effizient kann das zu schmelzende Material beheizt werden, indem die Schmelze mit Wechselstrom, bevorzugt mit einer Wechselstromfrequenz in einem Frequenzbereich von 5 Hz bis 1 MHz, bevorzugt etwa 1 kHz bis etwa 100 kHz, besonders bevorzugt bei etwa 10 kHz beheizt wird.

Das Verfahren wird bei besonders hohen mittleren Temperaturen der Schmelze durchgeführt werden. Erfindungsgemäß wird die Temperatur der Schmelze in zumindest einem Bereich auf mindestens 1700 °C, bevorzugt auf mindestens etwa 1800 °C, besonders bevorzugt auf mindestens etwa 2000 °C aufgeheizt. Weil bei den hohen Temperaturen, welche mit der Erfindung realisiert werden können und der damit einher gehenden optimalen Strömung des zu schmelzenden Materials durch die Einrichtung das Entfernen von Blasen und/oder anderen unerwünschten Substanzen gefördert wird, ist es vorteilhafterweise möglich, deutlich geringere Mengen von Läutermitteln einzusetzen.

Zum Reduzieren der Blasenkonzentration im zu schmelzende Material sind derartig hohe Werte für die Temperatur vorteilhaft, weil sie außer einer Erhöhung der Transportgeschwindigkeiten der zu entfernenden Substanzen in der Schmelze eine Verminderung der Viskosität herbeiführen, was das Entweichen der zu entfernenden Substanzen erleichtert.

Zum einen werden durch die Erfindung Reaktionen der zu entfernenden Substanzen mit dem Elektrodenmaterial und damit die Korrosion des Elektrodenmaterials reduziert. Zum anderen werden Reaktionen der zu entfernenden Substanzen in der Nähe der Elektrode reduziert, so daß die Gasblasenbildung vermindert wird.

Eine besonders geeignete Ausbildung des Strömungsprofils im Gefäß und eine entsprechend effiziente Energieausnutzung lässt sich dadurch erzielen, dass die Temperaturdifferenz zwischen der Schmelze in einem Randbereich des Gefäßes und der Schmelze im Mittelbereich des Gefäßes auf mehr als etwa 150 K, vorzugsweise mehr als etwa 250 K eingestellt wird.

Um das erfindungsgemäße Verfahren auf besonders einfache Weise in die Durchführung herkömmlicher Verfahren zu integrieren und diese herkömmlichen Verfahren dadurch weiter zu entwickeln, kann das Gefäß in oben beschriebener erfindungsgemäßer Weise als Teil einer kontinuierlich betriebenen Schmelzanlage betrieben werden. Dabei kann auch dem Gefäß vorteilhafterweise kontinuierlich zu schmelzendes Gut zu- und abgeführt werden. Beispielsweise kann das zu schmelzende Gut vorteilhafterweise aus einer Schmelzwanne dem Gefäß zugeführt und im Wesentlichen in geschmolzener Form aus dem Gefäß abgeführt werden. Dadurch wird ein direktes Einkoppeln des erfindungsgemäßen Verfahrens als ein Schritt des Behandlungsprozesses des einzuschmelzenden Materials vom Rohmaterial bis hin zum Endprodukt möglich.

Durch Zufuhr und Abfuhr des zu schmelzenden Gutes in bzw. aus dem Gefäß wird eine Hauptfließrichtung der Schmelze definiert. Grundsatzlich fließt der Strom gemäß der Erfindung in Fließrichtung der Glasschmelze, vorzugsweise senkrecht zur Fließrichtung der Glasschmelze, oder aber in jeder sonstigen beliebigen Richtung.

Besonders effizient kann die elektromagnetische Energie zur Beheizung der Schmelze eingekoppelt werden, wenn der Heizstrom zwischen den Elektroden im Wesentlichen entlang dieser Hauptfließrichtung oder senkrecht dazu fließt.

Fließt der Heizstrom senkrecht zur Hauptfließrichtung der Schmelze, wird also eine sogenannte Querbeheizung durchgeführt, fließt die Schmelze definiert in das Gefäß hinein. DasGlas "sturzt" sauber in das Gefäß hinein. Dadurch ist die Gefahr des Überströmens geringer gegenüber einer Fahrweise, bei welcher der Heizstrom entlang der Hauptfließrichtung der Schmelze fließt, also eine sogenannte Langsbezheizung durchgeführt wird. Je nach Anforderungen an den jeweiligen Anwendungsfall kann die Querbeheizung bevorzugt eingesetzt werden, die Langsbeheizung ist jedoch prinzipiell ebenfalls einsetzbar.

Zur Beeinflussung des Stromungsprofils der Schmelze durch das Gefäß beziehungsweise zur Beeinflussung des Temperaturprofils in der Schmelze bietet die Erfindung vorteilhafterweise weitere Möglichkeiten.

Insbesondere können alle Elektroden mit Strom derselben Stromstarke beaufschlagt werden. Es kann des Weiteren auch zumindest ein Paar von Elektroden mit Strom einer Starke beaufschlagt wird, welche sich von dem Wert der Stromstarke, mit welcher zumindest ein weiteres Paar von Elektroden beaufschlagt wird, unterscheidet. Ferner können die Elektroden in einer vorteilhaften Weiterbildung derart verschaltet sind, daß sich uberkreuzende Heizströme, insbesondere gemäß einer Scott-Schaltung, mit einer Phasenverschiebung, erzeugt werden.

Auf besonders einfache Weise kann das Schmelzgut durch eine Rinne mit freier Oberflache in das Gefäß eingebracht und aus dem Gefäß abgeführt werden. Eine Durchführung des Verfahrens mit möglichst wenig Zwischenschritten zur Führung der Schmelze wird vorteilhafterweise dadurch möglich, dass das Schmelzgut durch einen Zulauf und Ablauf im Bereich der Schmelzbadoberflache dem Gefäß zu- und aus dem Gefäß abgeführt wird. Um die Materialien insbesondere im Bereich des Ablaufes des Gefäßes durch die dort herrschenden sehr hohen Temperaturen der Schmelze zu schonen, ist erfindungsgemäß vorgesehen, dass der Ablaufbereich des Gefäßes zumindest teilweise gekühlt wird.

Eine im Hinblick auf Zeitaufwand und Effizienz der Energieausnutzung optimierte Durchführung des Verfahrens wird des Weiteren ermöglicht, indem die Verweilzeitverteilung und/oder die mittlere Verweilzeit der Schmelze im Gefäß geregelt und/oder gesteuert und/oder eingestellt wird. Ebenso kann das Stromungsprofil und/oder die mittlere Strömungsgeschwindigkeit der Schmelze im Gefäß geregelt und/oder gesteuert und/oder eingestellt werden Insbesondere kann das Volumen des Gefäßes so dimensioniert werden, dass die Schmelze in dem Gefäß eine mittlere Verweilzeit von mindestens 1 Minute, bevorzugt von mindestens etwa 10 Minuten bis zu einer Zeitdauer von etwa 2 Stunden hat. Erfindungsgemäß ist ein Anhaltspunkt für eine entsprechende Dimensionierung des Gefäßes darin zu sehen, dass das Gefäß mit einem Volumen bereitgestellt wird, welches mindestens um den Faktor 2, vorzugsweise mindestens um den Faktor 10 kleiner ist als das Volumen einer dem Gefäß vorgeschalteten Einschmelzwanne.

Um einen weiteren Parameter bereitzustellen, mit welchem das Einkoppeln der elektromagnetischen Energie von der Elektrode an das umgebende zu schmelzende Material erleichtert werden kann, ist erfindungsgemäße vorgesehen, dass zumindest eine Elektrode zeitweise beheizt wird. Dazu stehen verschiedene Möglichkeiten zur Verfugung. Beispielsweise kann das Beheizen durch Heizen eines Fluids, insbesondere mittels elektrischer Energie, durch Abwarme oder vorzugsweise mit fossilen Energieträgern erfolgen.

Im Hinblick auf die Herstellung besonders reiner Glaser kann das Verfahren durch den Einsatz einer je nach der Zusammensetzung der Schmelze gewählten oxidierenden beziehungsweise reduzierenden Oberofenatmosphäre weiter den spezifischen Anforderungen angepasst werden. Vorteilhafterweise kann somit insbesondere mit Hilfe einer Heizvorrichtung, beispielsweise eines entsprechend oxidierend oder reduzierend betriebenen Brenners, eine oxidierende und/oder eine reduzierende Oberofenatmosphare geschaffen werden.

Das erfindungsgemäße Verfahren kann in bevorzugter Weise derart durchgeführt werden, dass die Leitfähigkeit der Schmelze bei der mittleren Schmelztemperatur in einem Bereich von etwa 10⁻⁵ bis etwa 10⁴ Ω⁻¹ * cm⁻¹, bevorzugt von etwa 10⁻² bis etwa 10¹ Ω⁻¹ * cm⁻¹ aufweist.

Bei einer Leitfähigkeit in diesem bevorzugten Bereich ist das Einkoppeln der elektromagnetischen Energie mit Hilfe der Erfindung, besonders effizient möglich.

Um das Anfahren vorteilhafterweise weiter erleichtern zu können, ist gemäß dem erfindungsgemäßen Verfahren vorgesehen, dass ein Startvorgang durchgeführt wird, bei welchem in dem Gefäß zumindest ein Schmelzpfad mit ausreichender elektrischer Leitfähigkeit zwischen den Elektroden zum Einkoppeln der elektromagnetischen Energie in die Schmelze bereitgestellt wird.
Dazu können die Elektroden und/oder Teile der Wandung wahrend des Startvorganges mit einer Heizvorrichtung soweit erwärmt werden, dass deren Temperatur oberhalb des Taupunktes der Oberofenatmosphäre liegt. Ein Eintrag von Substanzen aus der Oberofenatmosphare in die Schmelze kann somit weitgehend vermieden werden.

Zum Erhohen des Energieeintrags in die Schmelze wahrend des Startvorgangs sieht die Erfindung verschiedene Möglichkeiten vor. Beispielsweise können wahrend des Startvorgangs Tauchelektroden in das Gefäß eingeführt und über diese zusätzlich ein Strom in das Schmelzgut geleitet werden. Des Weiteren kann wahrend des Startvorgangs zumindest eine Opferelektrode in das Gefäß eingeführt und über diese ein Strom durch das Schmelzgut gefuhrt werden.

Um das Anfahren durch die Bereitstellung eines zunächst kurzen Schmelzpfades mit ausreichender elektrischer Leitfähigkeit zwischen Elektroden erleichtern zu können, sieht die Erfindung vorteilhafterweise vor, dass die Elektroden und/oder die Tauchelektroden und/oder die Opferelektroden vor dem Startvorgang auf einen wahlbaren Abstand, im Wesentlichen der gewünschten Mindestlange des Strompfades zusammen geschoben und wahrend des Startvorgangs auseinander geschoben werden.

Die Verwendung von Opferelektroden und/oder Tauchelektroden zum Anfahren bieten vorteilhafterweise die Möglichkeit, auf eine drastische Erhöhung der Spannung zum Anfahren verzichten zu können. Der Ankoppelungsprozess kann je nach der Leitfähigkeit der Schmelze, Geometrie des Gefäßes, insbesondere Große der Kuhlflache, und der Elektrodengeometrie gemäß der Erfindung mit einer Spannung von etwa 1000 V gefahren werden.

Die Erfindung kann in vorteilhafter Weise zudem dahingehend ausgestaltet werden, dass der Oberofenbereich des Gefäßes separat beheizt wird. Die Beheizung des Oberofenraumes kann insbesondere mittels Brennern, insbesondere Gasbrennern und/oder Strahlungsbeheizung und/oder Mikrowellenbeheizung und/oder Plasmabrennern erfolgen. Durch das separate Beheizen des Oberofenraumes kann ein Temperaturgefälle in der Schmelze hin zu ihrer Oberflache und damit eine Energieabfuhr aus der Schmelze an den Oberofenraum zumindest vermindert werden.

Für eine effiziente Einkopplung der eingebrachten Energie in die gesamte Schmelze und damit eine gleichmäßige Temperaturverteilung und somit eine relativ lange Verweilzeit bei der gewünschten Temperatur für nahezu alle Fluidelemente der Schmelze hat es sich als besonders vorteilhaft erwiesen, eine Konvektionsströmung in der Schmelze zu erzeugen. Auf einfache Weise kann diese Konvektionsstromung durch Einstellen einer Temperaturdifferenz der Schmelze zwischen einem inneren und einem äußeren Bereich erzeugt werden.

Um die Strömung durch das Gefäß, insbesondere die Konvektionsstromung, gezielt beeinflussen zu können, ist erfindungsgemaß vorgesehen, dass die Strömung aufgrund der Stromverteilung auf zumindest zwei Elektroden geregelt und/oder gesteuert und/oder eingestellt wird.

Eine einfache Möglichkeit, um die Strömung mechanisch zu beeinflussen, ist durch die Verwendung von Einbauten im Inneren des Gefäßes vorgesehen. Des Weiteren kann die Strömung durch Steuerung des Durchsatzes der Schmelze durch das Gefäß beeinflusst werden.

Um das Verfahren des Reinigens der Schmelze in dem Gefäß für die jeweiligen Anforderungen optimal durchführen zu können, sind damit vorteilhafterweise mehrere Einflussmoglichkeiten auf den wichtigen Betriebsparameter der Verweilzeitverteilung, welche außer durch die geometrische Gestaltung des Gefäßes durch die Wahl der geeigneten mittleren Durchflussgeschwindigkeit beziehungsweise des Durchsatzes sowie durch die Temperaturverteilung und damit auch durch die Ausbildung der Konvektionswalze beeinflusst werden kann. Das Stromungs und insbesondere damit zusammenhangend das Temperaturprofil im Gefäß kann mit den genannten Maßnahmen erfindungsgemäße auf besonders einfache und zuverlässige Weise angepasst an die jeweiligen Anforderungen beeinflusst werden.

Vorteilhafterweise können die erfindungsgemäßen Verfahren automatisiert betrieben werden. Eine Möglichkeit dazu sieht vor, dass die Regelung und/oder Steuerung der Heizleistung der Elektroden durch Regelung und/oder Steuerung und/oder Einstellung des Stromes, welcher durch die Elektroden fließt, erfolgt. Eine andere Möglichkeit liegt darin, dass die Regelung und/oder Steuerung der Heizleistung der Elektroden durch Regelung und/oder Steuerung und/oder Einstellung der aufgewendeten elektrischen Leistung erfolgt. Die Auswahl zwischen beiden Möglichkeiten kann nach den Eigenschaften des Schmelzgutes getroffen werden.

Insbesondere bei Gläsern nimmt die elektrische Leitfähigkeit mit steigender Temperatur zu. Wird die eingebrachte Leistung konstant gehalten, nimmt bei abnehmenden elektrischen Widerstand, also steigender Leitfähigkeit, die Stromaufnahme durch die Elektroden zu. Damit ist die Gefahr einer Schädigung des Elektrodenmaterials gegeben. Mit einer Stromregelung kann daher schnell auf sich aufbauende Stromfäden reagiert werden, welche durch die Gefahr der Überhitzung bei Gläsern, deren Leitfähigkeit vom Stromdurchfluss abhängt, äußerst nachteilig für die Produkteigenschaften sind.

Um unerwünschte Substanzen, insbesondere Gasblasen, aus der Schmelze zu entfernen, kann dieser zumindest ein Hochtemperaturläutermittel, beispielsweise Zinndioxid zugesetzt werden.

Die oben genannten Aufgaben werden des Weiteren gelöst durch eine Vorrichtung zum Läutern einer Schmelze, welche eine zumindest einen Innenraum definierende Anordnung, insbesondere ein Gefäß, zur Aufnahme von Schmelzgut und zumindest zwei Elektroden zur ohmschen Widerstandsbeheizung der Schmelze umfaßt, wobei die Elektroden derart angeordnet sind, daß sie in den Innenraum der Anordnung, insbesondere des Gefäßes hineinragen.

Die Elektrode kann derart über den Elektrodenhalter im Boden eingesetzt sein, dass sich ein Ringspalt zwischen Elektrode und Bodenstein ausbildet.

In diesem Ringspalt kann zur elektrischen Isolierung ein Ring aus einem feuerfesten Material, welches bei Betriebstemperatur einen höheren Widerstand als das Glas aufweist, eingesetzt werden. Zusätzlich kann der Boden mit einer entsprechenden Kühlung ausgestattet werden, so dass sowohl das Strömungsprofil positiv beeinflusst, als auch der Bodenstein vor Korrosion geschützt wird.

Um der Gefahr von Korrosion des Materials der Gefaßwandungen zu begegnen ist vorgesehen, dass zumindest eine Wand der Vorrichtung kühlbar ist.

Um die Elektroden vorteilhafterweise durch den Boden des - Gefäßes einsetzen zu können, weist der Boden des Gefäßes zumindest eine Aussparung auf. Diese Aussparung kann als Bohrung gestaltet sein, welche in einem bestimmten, Abstand, von den Seitenwänden angebracht werden kann, welcher vorzugsweise größer oder gleich etwa 15 mm ist.

Solche Bohrungen können derart gestaltet sein, dass die Elektroden mitsamt den kühlbaren Elektrodenhaltern in die Bohrungen eingesetzt werden können. Um die erfindungsgemäße Vorrichtung möglichst variabel, je nach Bedarf auch an verschiedenen Standorten, einsetzen zu können, können das Gefäß, welches als Skulltiegel ausgebildet sein kann, mitsamt dem Boden und Elektrodenhaltern auf einem Tragegestell montiert werden.

Vorteilhafterweise umfasst die Vorrichtung des Weiteren insbesondere kuhlbare Elektrodenhalter. Zudem kann sie eine Einrichtung zur Kühlung zumindest einen Elektrodenhalters und/oder zumindest einer Elektrode und/oder zumindest eines Teils der Gefaßwand oder zumindest eines Teils des Bodens aufweist, welche mindestens eine Einrichtung zum Bereitstellen eines gekühlten und/oder kühlbaren Fluids, insbesondere Luft und/oder Wasser und mindestens eine Einrichtung zur Förderung des Fluids aufweist.

Die Elektroden können unterschiedliche Geometrien und Formen aufwiesen. Insbesondere können die Elektroden Platten- und/oder Knopf- und/oder Kugel- und/oder Stabelektroden und/oder Rogowskielektroden umfassen.

Es können auch hammerformige Elektroden eingesetzt werden. Form und Geometrie der Elektrode beeinflussen dabei die Effizienz des Energieeintrages in das zu schmelzende Material. Als besonders vorteilhaft beim Einbau der Elektroden, insbesondere im Boden des Gefäßes, haben sich Stabelektroden erwiesen, welche als Vollmaterial und/oder als Kappenelektroden ausgeführt sein können. Elektroden mit gezielt vergrößerter Oberfläche, wie beispielsweise als Plattenelektroden oder in Form eines Hammers, bieten den Vorteil, die Belastung der Elektrodenflache durch zu hohe Stromdichten verringern zu können. Dazu kann weiter eine entsprechende Gestaltung der Form beitragen, bei welcher scharfe Übergänge wie insbesondere Kanten vermieden werden. Vorteilhaft haben sich abgerundete äußere Begrenzungen der Elektroden erwiesen.

Die Anordnung der Elektroden, insbesondere der Abstand der Elektrodenmitte von der als nächste benachbarten Wand, kann in Abhängigkeit der Leitfähigkeit der Schmelze ausgewahlt werden. Durch die Verwendung von Stabelektroden wird eine Möglichkeit geschaffen, die Seitenwande des Gefäßes komplett in Skull zu halten, wodurch sich die Kuhlflache der Seitenwände erhoht und somit auch die Kühlwirkung auf die Schmelze, wodurch zudem die Konvektion unterstutzt werden kann.

Durch den Abstand zu den insbesondere gekühlten Seitenwänden der Elektroden kann ein Überschlag zwischen Elektrode und Seitenwand vermieden werden. Ein weiterer Vorteil ist, dass der Eintrittspunkt der Elektrode in das Gefäß in einem relativ kalten Bereich liegt und somit entsprechend elektrisch isoliert ist. Die erfindungsgemäße Anordnung der Elektroden bringt des Weiteren den Vorteil mit sich, dass keine mit den gekühlten Tiegelwänden verbundenen gekühlten Bauteile in den Oberofenraum ragen. Vorteilhafterweise kann dadurch eine Korrosion von Bauteilen durch die in der Oberofenatmosphäre vorhandenen Schwefelverbindungen vermieden werden.

Entscheidend für die Einsatzmöglichkeit eines Materials als Elektrode in der erfindungsgemäßen Vorrichtung ist es, dass das Material bei der Betriebstemperatur der Vorrichtung nicht mit der Schmelze reagiert. Erfindungsgemäß können weisen die Elektroden ein Schmelzkontaktmaterial auf, welches Iridium umfasst. Als aktives Elektrodenmaterial kommt dabei Iridium besondere Bedeutung zu.

Der Begriff "aktives" Element bezieht sich dabei auf die Mehrfachfunktion, die die Elektrode ausübt. Neben der Beheizung wird über die Elektrode auch die Strömung der Schmelze erreicht, indem sie eine Art Antrieb für die Konvektionsströmung im Gefäß bildet. Die Elektroden sind neben dem wassergekühlten Skull, welcher eine Abwärtsströmung der Schmelze im Gefäß bewirkt, ein Teil des sogenannten Konvektionsmotors. Durch die Wärmequelle, auch Quelltherme genannt, um die Elektrode bildet sich eine Aufwärtsströmung der Schmelze im Gefäß. Die Elektrode hat somit einerseits die Funktion der Beheizung und andererseite die eines Konvektionsmotors und wird daher als "aktives" Element bezeichnet.

Die erfindungsgemäße Kombination aus Skulltiegel und Elektrode verhindert durch die vorteilhafte Gestaltung des Stromungsprofils der Schmelze durch das Gefäß das Überstömen des Tiegels. Durch den Einsatz von Iridium können dabei sehr hohe Einsatztemperaturen von über 2000 °C realisiert werden.

Neben Elektroden, insbesondere Metallelektroden, aus Vollmaterial ist es erfindungsgemäß auch möglich, Elektroden einzusetzen, welche lediglich eine Schicht eines betreffenden Materials aufweisen. Dazu kann die Elektrode einen Kern, bevorzugt einen Keramikkern umfassen. Vorteilhafterweise ist es des Weiteren vorgesehen, dass zumindest eine Elektrode mit einer Schicht versehen ist, welche insbesondere Osmium, Hafnium, Molybdän, Wolfram, Iridium, Tantal, Platin, Platinmetalle und/oder deren Legierungen umfasst. Auch Beschichtungen mit jedem anderen geeigneten Material sind gemäß der Erfindung für den Einsatz in der Vorrichtung möglich.

Um Form und Geometrie der Elektroden in einem weiten Bereich variieren zu können, sieht die Erfindung vor, dass zumindest eine der Elektroden zumindest zwei Elektrodensegmente umfasst. Unter dem Begriff "Segment" wird dabei zumindest ein Abschnitt einer Elektrode verstanden, welcher eine bestimmte außere Form und/oder einen bestimmten inneren Aufbau aufweist. Die Elektroden können erfindungsgemaß aus unterschiedlichen Segmenten zusammengesetzt sein, jedoch auch einstückig gefertigt sein, wobei das einstückige Material verschiedene Bereiche unterschiedlicher äußerer Form und/oder unterschiedlicher inneren Aufbau aufweist und somit ebenfalls im erfindungsgemäßen Sinn segmentiert ist.

Um auf geänderte Anforderungen an die einzusetzenden Elektroden und/oder auf Schaden an Elektroden auf einfache Weise flexibel reagieren zu können, ist erfindungsgemäß des Weiteren vorgesehen, dass zumindest eine Elektrode auswechselbar an der Vorrichtung angebracht ist.

Besondere Vorteile, insbesondere für das Anfahren der Vorrichtung, können dadurch realisiert werden, dass zumindest eine Elektrode, insbesondere in vertikaler Richtung verfahrbar an der Vorrichtung angebracht ist. Dann kann die Elektrodenhohe gemessen vom Boden des Gefäßes so gewählt werden, dass beispielsweise das erstmalige Zünden der Elektroden in Abhängigkeit von der Leitfähigkeit der Schmelze vereinfacht wird.

Durch die variable, insbesondere auswechselbare Befestigung der Elektroden im Material des Bodens, insbesondere des Skullbodens, des Gefäßes wird zudem die Möglichkeit eröffnet, den Boden modular aufzubauen aus Elementen, die eine Einrichtung zur Aufnahme einer Elektrode aufweisen und einfachen Bodenelementen ohne eine derartige Einrichtung. In die Elemente, die eine Einrichtung zur Aufnahme einer Elektrode aufweisen, können die gewünschten Elektroden verschiebbar eingesetzt werden.

Aus den beiden Arten von Elementen für den Boden des Gefäßes können unterschiedliche Anordnungen realisiert werden, welche die Positionierung der Elektroden an den jeweils für die optimale Ausbildung der Strömung, insbesondere der Konvektionswalze im Inneren des Gefäßes erforderlichen Stellen ermöglichen. So können die Elektroden beispielsweise in einer Reihe angeordnet werden, jedoch auch in ihrer Funktion als strombrechende Einbauten weiter im Inneren des Gefäßes positioniert werden.

Über die Wahl des Elektrodenmaterials, beispielsweise einer Keramik, kann Ausdehnung und Geschwindigkeit der Konvektionswalze über eine gezielte Einstellung eines Stromfadens definiert werden. Durch zusätzliche Beweglichkeit der Elektroden können die Möglichkeiten für ihre Positionierung vorteilhafterweise erweitert werden. So ist es erfindungsgemaß zudem vorgesehen, dass zumindest eine Elektrode schwenkbar angebracht ist.

Um die Temperaturbelastung der Elektroden vermindern und damit besonders hohe Schmelztemperaturen realisieren zu können, kann zumindest eine Elektrode kühlbar sein. Dazu kann eine Elektrode zumindest einen Kanal zum Hindurchleiten eines Fluids umfassen.

Die Anordnung der Elektroden kann, nebeneinander in einer Reihe erfolgen. Die Erfindung sieht je nach Anforderungen an das sich einstellende Strömungsprofil unterschiedliche Möglichkeiten vor, die Elektroden anzuordnen. Beispielsweise können die Elektroden nebeneinander in zwei Reihen angeordnet sein, die sich parallel gegenüberstehen. Es ist jedoch auch möglich, die Elektroden derart nebeneinander in zwei Reihen anzuordnen, dass sie sich orthogonal gegenuberstehen.

In einer weiteren bevorzugten Ausfuhrungsform können die Elektroden im unteren Teil des Gefäßes, vorzugsweise unterhalb des Niveaus, in welchem sich die Oberflache der Schmelze im Betriebszustand befindet, im Bereich der zwei unteren Drittel der Füllhöhe des Gefäßes angeordnet sein.

Die Vorrichtung kann dabei mehrere Elektrodenpaare und/oder mehrere Paare von Elektrodensegmenten aufweisen.

Die Anordnung der Elektroden kann auch derart erfolgen, dass die Elektroden als stromungsbrechende Einbauten auf die fließende Schmelze wirken. Erfindungsgemäß wird durch die Anordnung der Elektroden eine Aufstellung realisiert, bei welcher die Elektroden keinen direkten Kontakt mit den beispielsweise wassergekühlten Wanden des Gefäßes haben und der Abstand zwischen Elektrode und metallischen Bauteilen in Bereichen, in denen die Elektroden noch Temperaturen oberhalb von 1600°C haben, mindestens 1 cm, bevorzugt mehr als 2 cm beträgt. Die Elektroden können dabei mit einer Innenkühlung versehen sein, jedoch auch ungekuhlt betrieben werden.

Die Wande der erfindungsgemäßen Vorrichtung können je nach Anforderungen flexibel gestaltet werden. Das Gefäß kann Skullwande und/oder Keramikwande umfassen. Vorteilhafterweise weist das Gefäß Skullwande auf, welche vorzugsweise metallische Rohre umfassen, welche auf der der Schmelze zugewandten Seite mit einem elektrisch schlecht leitenden Material, vorzugsweise in Form von Keramikplatten oder Schlicker, insbesondere SiO₂-Schlicker, ausgekleidet sind.

Der Boden des Gefäßes kann beispielsweise aus schmelzgegossenem Feuerfestmaterial wie Zirkonsilikat bestehen, was bei den hohen Betriebstemperaturen immer noch einen deutlich höheren Widerstand als die Schmelze gewahrleistet. Durch die Anordnung von Kuhlrohren quer zu den Elektroden kann der Boden vor Korrosion und unkontrolliertem Stromfluss geschützt werden.

Das Gefäß der erfindungsgemäßen Vorrichtung kann in bevorzugter Ausführung einen gekühlten Boden sowie gekühlte Seitenwände aufweisen, von denen zwei sich gegenüberliegende Seitenwande den Zulauf und den Ablauf bilden. Das Gefäß kann als Skulltiegel ausgeführt sein. Die Skullwande können dabei derart ausgebildet sein, dass sie in eingebautem Zustand unterhalb der Schmelzoberfläche um einen Winkel nach außen abgewinkelt sind, wodurch ein Kragen gebildet wird. Besonders einfach herzustellen ist ein derartiger Kragen, wenn der Winkel für alle Skullwande etwa 90° beträgt. Die Seitenwande sind dann also L-förmig abgewinkelt.

Wahrend bei bekannten Vorrichtungen der Nachteil besteht, daß die Elektroden unterhalb des Randes des Gefäßes angeordnet sind, und daher die Energie zum Starten in tiefere Schichten des Glases gefuhrt werden muß, so daß der Skulltiegel sehr stark belastet wird, und zwar sowohl thermisch als auch durch hohe elektrische Spannungen, bietet die Erfindung den Vorteil, daß die Elektroden bundig mit der Oberkante des Skullkragens angeordnet werden können. Dies fuhrt zu einem deutlich geringeren Energiebedarf beim Einkoppeln und geringerer Belastung des Gefäßes. Da gemäß der Erfindung alle Seitenwände des Gefäßes bis zum Boden gekühlt werden können, ist zudem die Gefahr des Überstromens deutlich geringer.

Zu- und Ablauf des Gefäßes können dabei im Vergleich miteinander asymmetrisch ausgebildet sein, das heißt, der Kragen kann asymmetrisch ausgebildet sein. Auf der Seite des Zulaufs kann der von der Seitenwand abgewinkelte Teil relativ kurz gestaltet werden, da hier das ankommende Material noch keine extrem hohe Temperatur aufweist. Nachdem das Material über diesen kurzen Bereich des Zulaufs geflossen ist, stürzt es abrupt in das Gefäß hinein, wo es insbesondere auch durch die sich ausbildende Konvektionswalze, welche ab einer bestimmten Temperatur selbständig lauft, durch das Gefäß hindurch gefordert wird.

Auf Seiten des Ablaufs wird das einzuschmelzende Material an der Seitenwand nach oben transportiert, wo es mit sehr hohen Temperaturen ankommt. Um sich an die erfindungsgemäße Vorrichtung angrenzende Bauteile nicht zu schädigen, weist der im Bereich des Auslaufs von der Seitenwand abgewinkelte Teil eine relativ große Länge auf. Der Auslauf kann insbesondere die Funktion einer Kühlstrecke übernehmen. Entsprechend der herrschenden Temperaturen kann die L-Form der Seitenwande auch im seitlichen Bereich des Gefäßes entsprechend geschaltet sein. Insbesondere können die Seitenwande aus L-formigen wassergekühlten Skullsegmenten, bestehend aus z.B. Kupferrohr beliebigen Querschnitts, insbesondere, um den Aufbau der Seitenwände zu erleichtern, aus Vierkant-Kupferrohren gebildet werden.

Seitenwände und, wie oben bereits ausgeführt, die Elemente, aus welchen der gekühlte Boden des Gefäßes aufgebaut ist, ermöglichen eine Modulbauweise der erfindungsgemäßen Vorrichtung, in welche stromungsbeeinflussende Einbauten, insbesondere zum Beeinflussen der Konvektionswalze angeordnet werden können. Auch die Wände des Gefäßes können erfindungsgemaß daher zumindest zwei Untereinheiten umfassen. Dadurch kann die Große des Gefäßes auf einfache Weise an flexible Anforderungen angepasst werden.

Die Untereinheiten der Wände können elektrisch voneinander getrennt sein. Vorteilhafterweise sind dazu zwischen den Untereinheiten isolierende Trennelemente, insbesondere Glimmerscheiben einbringbar. Mittels einer mechanischen Befestigung, insbesondere einer Verspannung können die Seitenwände und der Boden des Gefäßes auslaufsicher miteinander verbunden werden. Trennelemente, insbesondere die Glimmerscheiben, bilden dabei eine Isolierung der Skullelemente.

Die isolierenden Trennelemente, welche z.B. als Glimmerplättchen ausgerührt sein können, sind zwischen jeweils zwei benachbarten, das heißt, sozusagen um jedes Skull-Segment herum, angeordnet. Die isolierenden Trennelemente befinden sich damit sowohl längs als auch quer zur Stormflussrichtung. Somit wird vorteilhafterweise verhindert, dass der elektrische Strom ungehindert über die Wände des Skulltiegels fließen kann.

Um die ohmsche Widerstandsbeheizung in der erfindungsgemäßen Vorrichtung realisieren zu können, ist vorgesehen, dass eine Einrichtung zur Erzeugung von Wechselstrom 5 Hz bis 1 MHz, bevorzugt mit einer Wechselstromfrequenz in einem Bereich von etwa 1 kHz bis etwa 100 kHz, besonders bevorzugt mit einer Wechselstromfrequenz von etwa 10 kHz bereitgestellt wird.

Materialien, welche mit dem einzuschmelzenden Material in Beruhrung kommen, werden erfindungsgemaß derart ausgewählt, dass sie gegen das einzuschmelzende Material und seine Schmelze chemisch im Wesentlichen resistent sind. Dies trifft für Elektroden und/oder die Wandungen des Gefäßes gleichermaßen zu. Das Gefäß umfaßt vorzugsweise Kupfer. Als Material für das Gefäß kommen beispielsweise auch Iridium, Rhodium oder Molybdän in Frage.

Die erfindungsgemäße Vorrichtung weist ein Gefäß auf mit einer Geometrie, welche ein möglichst geringes Verhältnis zwischen Oberflache und Volumen ermoglicht, um Energieverluste über die Oberfläche weitgehend vermeiden zu können. Eine derartige Geometrie kann in Abwandlungen des Grundkorpers eines Würfels realisiert werden, insbesondere kann das Gefäß einen vieleckigen, insbesondere rechteckigen, insbesondere quadratischen oder runden, insbesondere ovalen, insbesondere kreisförmigen Grundriss aufweisen.

Es hat sich gezeigt, dass eine wichtige Große im Hinblick auf die effiziente Energieausnutzung das aktiv genutzte Volumen pro Tagesdurchsatz ist. Je nach Anforderungen beispielsweise an den Lauterprozess, wenn eine große Menge von Gas aus dem zu schmelzenden Material entfernt werden soll, kann es auch vorteilhaft sein, das Verhältnis von Oberfläche zu Volumen des Gefäßes möglichst groß zu wählen um den Gasblasen eine große Austrittsflache zu bieten. Dies kann dadurch geschehen, dass insbesondere mit der vorteilhaften Modulbauweise des Gefäßes seine Hohe bei unveränderter Bodenflache entsprechend angepasst wird.

Um Energieverluste an die Umgebung des Gefäßes minimieren zu können, sieht die Erfindung zudem vor, dass die Vorrichtung eine Einrichtung zur Zusatzbeheizung aufweist. Die Zusatzbeheizung kann zumindest eine Strahlungsbeheizung und/oder eine Mikrowellenbeheizung und/oder eine Plasmabrennerbeheizungen umfassen.

Des Weiteren kann wenigstens eine der Elektroden eine Heizvorrichtung umfassen.

Die Vorrichtung umfasst zumindest einen Zulauf- und zumindest einen Ablaufbereich. Zum Schutz gegen die insbesondere im Bereich des Ablaufes herrschenden sehr hohen Temperaturen kann der Ablaufbereich der Vorrichtung zumindest teilweise eine keramische.Schicht umfassen. Zudem kann der Ablauf vorteilhafterweise als Kühlstrecke ausgebildet sein.

Der Boden des Gefäßes umfasst zumindest ein Feuerfestmaterial, insbesondere ein Feuerfestmaterial mit einer elektrischen Leitfähigkeit von vorzugsweise kleiner oder gleich 1/30 Ω⁻¹ * cm⁻¹ bei 1600 °C.

Beispielsweise kann das Feuerfestmaterial Zirkonsilikat umfassen. Der Boden des Gefäßes kann zudem eine Kühleinrichtung aufweisen, welche zumindest eine mit einem Fluid, insbesondere Wasser, kuhlbare Leitung umfasst, welche gewinkelt zu einer Stromflussrichtung in der Schmelze, insbesondere mit einem Winkel von 90°, ausgerichtet ist und den Boden des Gefäßes berührt.

Um außer durch das Vorsehen und Positionieren von Elektroden eine weitere Möglichkeit zur Verfügung zu stellen, das Strömungsprofil durch das Gefäß beeinflussen zu können, sieht die Erfindung zudem vor, dass die Vorrichtung Einbauten umfasst, welche zur Beeinflussung der Strömung der Schmelze durch das Gefäß geeignet sind.

Die Vorrichtung kann des Weiteren zumindest eine Düse zum Eintrag eines Gases, insbesondere zum Eintrag von N2 und/oder He und/oder Ar, umfassen. Auch andere Gase können je nach Anwendungsfall gewählt werden. Mit derartigen Düsen kann vorteilhafterweise ein sogenanntes "Bubbling" durchgeführt werden. Dieses bietet die Möglichkeit, die Konvektion der Schmelze im Gefäß zu beeinflussen. Insbesondere kann die Konvektionsströmung verstarkt werden. Zudem kann mittels des Bubbling Einfluß au die Temperaturverteilung in der Schmelze genommen werden.

Die erfindungsgemäße Vorrichtung kann insbesondere als Bestandteil einer großeren Anlage verwendet werden. Wird in einer derartigen Anlage eine bestimmte Menge Schmelze bereitgestellt, von welcher nur ein Teil derart weiter verarbeitet werden soll, dass die mit der Erfindung verbundenen Vorteile realisiert werden können, sieht die Erfindung des Weiteren vor, dass eine Stromteilungseinrichtung zum Aufteilen eines Schmelzflusses in zumindest zwei Teilstrome bereitgestellt wird, so dass zumindest eine erfindungsgemäße Vorrichtung in einem der Teilstrome angeordnet werden kann, und der andere Teilstrom auf andere Weise weiter verarbeitbar ist. Die Vorrichtung wird als Läuter modul verwendet werden, welches einer folgenden Einheit vorgeschaltet werden kann, insbesondere einer Homogenisiereinheit und/oder einer Formgebungseinheit.

Ebenso kann die erfindungsgemäße Vorrichtung als Läuter-zmodul eingesetzt werden, welches einer Overflow-Downdraw-Einheit vorgeschaltet sein kann. Dies wird dadurch möglich, daß die vorliegende Erfindung die Herstellung einer in hochstem Maße homogenen Schmelze ermöglicht, welche sich insbesondere als Ausgangsmaterial für die Herstellung beispielsweise von Displaygläsern in einem Overfow-Downdraw-Verfahren eignet.

Die Erfindung kann des Weiteren als Läuter modul eingesetzt werden, welches in eine Schmelzwanne, das heißt in ein von Schmelze durchstromtes Gefäß, eingebaut wird. Die Schmelzwanne kann dazu beispielsweise in einem Bereich zu einem Läuter modul ausgebildet sein.

Dies kann insbesondere realisiert werden, indem vom Boden der Schmelzwanne aus ein sogenanter Wall aufgebaut wird. Dieser Wall kann zum Beispiel gekühlte Wände aufweisen, die Refraktärmetalle ((z.B. Molybdän) umfassen. In den inneren Bereich des Walles kann die erfindungsgemäße Vorrichtung integriert werden. Insbesondere kann die Vorrichtung im Bereich ihrer Seitenwände mit den Wanden verbunden sein, die den Wall bilden.

Der Fullstand der Schmelzwanne in Strömungsrichtung gesehen vor beziehungsweise hinter dem Wall kann deutlich großer sein als der Fullstand im Bereich des Läutermoduls. Dies kann dadurch erreicht werden, das das Modul sozusagen in den Wall "eingehängt" ist und die Hohe vom Boden des Moduls bis zu seiner oberen Begrenzung deutlich geringer ist als der Abstand vom Boden der Schmelzwanne zur oberen Begrenzung des Walles.

Da bei einer derartigen Anordnung der Weg, welchen Blasen aus der Schmelze zum Verlassen derselben im Läutermodul zuruckzulegen haben, gering ist im Vergleich zu dem entsprechenden Weg in der Schmelzwanne, ist die Lauterwirkung deutlich verbessert. Dazu trägt insbesondere die hohe Temperatur der Schmelze bei, welche mit der erfindungsgemäßen Vorrichtung im Läutermodul erzielbar ist .

Um den Betrieb einer erfindungsgemäßen Vorrichtung beziehungsweise die Durchführung eines erfindungsgemäßen Verfahrens zum Läutern einer Schmelze besonders zuverlassig realisieren zu können, ist es erforderlich, eine geeignete Regelung bereitzustellen. Die oben genannten Aufgaben werden daher mit einem Regelungsverfahren für eine Anlage zur Temperaturbeeinflussung und/oder zum Läutern und/oder Reinigen von Schmelzen gelost, bei welchen zumindest zwei Elektroden im Inneren eines Gefäßes angeordnet werden, und der elektrische Strom durch die zumindest zwei Elektroden als Regel- und/oder Stellgroße fur zumindest eine Zielgröße, insbesondere die Temperaturverteilung und/oder das Strömungsprofil im Gefäß herangezogen wird. In einer vorteilhaften Weiterbildung kann als Zielgroße das Strömungsprofil in der Konvektionswalze herangezogen werden.

Weiterhin wird ein Regelungsverfahren für eine Anlage zur Temperaturbeeinflussung und/oder zum Läutern und/oder Reinigen von Schmelzen vorzgeschlagen, bei welchen zumindest zwei Elektroden im Inneren eines Gefäßes angeordnet werden und die von den zumindest zwei Elektroden abgegebene elektrische Leistung als Regel- und/oder Stellgroße für zumindest eine Zielgröße, insbesondere die Temperaturverteilung oder das Strömungsprofil im Gefäß herangezogen wird. Als Zielgröße kann insbesondere das Strömungsprofil in der Konvektionswalze herangezogen werden.

Zur Beeinflussung des Strömung-/Temperaturprofils können die Elektroden entweder alle mit dem gleichen Strom beaufschlagt werden, oder einzelne Elektrodenpaare werden individuell beaufschlagt. Weiterhin sind neben der parallel (Querbeheizung) liegenden Stromflussrichtung auch sich uberkreuzende (Scott-Schaltung) Stromflussrichtungen mit Phasenverschiebung möglich. Daruber hinaus sind alle weiteren Verschaltungsmöglichkeiten anwendbar, auch zwischen unmittelbar benachbarten Elektroden.

Des Weiteren ist vorgesehen, die Elektroden zumindest zeitweise pulsierend zu steuern. Diese Möglichkeit bietet den Vorteil, bei sich beispielsweise aufgrund der Temperaturanderung der Schmelze wahrend der Durchführung des Verfahrens ändernden Strömungsparametern durch gezielte Energiepulse das gewünschte Strömungsprofil beibehalten zu können. Ebenso kann durch einen gepulsten Betrieb der Elektroden beim Anfahren dem kontinuierlichen Energieeintrag durch eine bestimmte Stromstarke örtlich und/oder zeitlich ein gepulster, hoherer Energieeintrag uberlagert sein, um eine Möglichkeit zur Verfugung zu stellen, mit welcher das gewünschte Strömungs- und/oder Temperaturprofil schneller erzeugt als ohne Aufpragen eines uberlagerten gepulsten Energieeintrags.

Gemäß den erfindungsgemäßen Verfahren und/oder in der erfindungsgemäßen Vorrichtung geläuterte. Produkte können beispielsweise über den Wert für das Verhältnis der Menge an Sn4+ zur Gesamtmenge an Sn2+, welche die Summe aus Sn2+ und Sn4+ ist, charakterisiert werden. Bei hoheren Temperaturen wird das Verhältnis in Richtung Sn2+ verschoben. Durch die hohen Temperaturen, welche mittels der Erfindung realisiert werden können, liegt der Wert für das Verhältnis der Menge an Sn2+ zur Menge an Sn im Vergleich zu Verfahren mit herkömmlichen Lautertemperaturen derart verschoben, daß zumindest 2 % bis zumindest 40 % mehr an Sn2+ im Gemisch vorhanden sind.

Da die Läuter wirkung, insbesondere durch die sehr hohen erzielbaren Temperaturen durch die Erfindung stark verbessert wird, ist es möglich, kostengünstigeres Ausgangsmaterial, also solches von geringerer Reinheit einzusetzen, da die erforderliche Qualitat des Produkts durch die hohe Läuter wirkung aufgrund der Erfindung immer noch sichergestellt werden kann. Beispielsweise werden Wasser, Schwefel und Halogene während des Läuter- beziehungsweise Reinigungsprozesses aus der Schmelze entfernt.

Parameter, welche minderwertige Rohstoffe charakterisieren, können ein besonders hoher Wassergehalt, ein besonders hoher Schwefelanteil, ein besonders hoher Gehalt an leicht flüchtigen Komponenten wie beispielsweise Chlorid sein. In Bezug auf den Gehalt an Eisen ist zu berücksichtigen, daß Fe zur Läuterung beiträgt und das Verhältnis der Mengen von Fe³⁺ zu Fe²⁺ wird in Richtung Fe²⁺ verschoben wird. Auch ist durch die hohen Prozeßtemperaturen mit Verschiebungen des Quotienten Fe2+/(Fe2+ + Fe3+) um mindestens 2% bis hin zu mindestens 40% zu rechnen.

Das Produkt kann zumindest ein Glas und/oder zumindest eine Glaskeramik und/oder zumindest eine Keramik aufweisen, die eine geringe elektrische Leitfähigkeit hat. Insbesondere kann das Produkt Alumosilikat-Glas, insbesondere Display-Glas oder Lampenglas umfassen. Das Produkt kann insbesondere Borosilikat-Glas, insbesondere in einer Anwendung für Pharmaverpackungen umfassen.

Die Erfindung bezieht sich des Weiteren auf aggressive Gläser wie zum Beispiel Zinksilikat- oder Lanthanboratgläser, welche ansonsten nur sehr schwierig zu schmelzen sind. Auch Bleisilikatgläser können mit Hilfe der Erfindung gehandhabt werden.

Im Hinblick auf die Produkte, welche mit Hilfe der Erfindung geläutert werden können, ergeben sich besondere Vorteile dadurch, dass sie besonders blasenarm sind.

Durch den insgesamt nur äußerst geringen erforderlichen Einsatz von Läutermitteln sind die Ruckstande von Läutermitteln im Produkt, wie beispielsweise der Zinndioxidgehalt ebenfalls sehr gering. Das Produkt hat daher einen Anteil von Zinn von weniger als 1,0 Gew.-%, bevorzugt von weniger als als 0,4 Gew.-%, bevorzugt von weniger als 0,2 Gew.-%, und besonders bevorzugt von weniger als 0,1 Gew.- %.

Die Erfindung ermöglicht zudem die Fertigung von Glasern mit einem geringeren Gehalt an Knoten. Knoten sind z.B. Bereiche, aus denen Substanzen wie Natrium und/oder Bor verdampfen und damit andere Festigkeitseigenschaften herbeigeführt werden. Durch derartige Knoten entstehen insbesondere Probleme beim Rohrziehen. Die Erfindung ermöglicht daher das Herstellen insbesondere von Rohren aber auch anderen Glasern, welche im Wesentlichen keine Knoten aufweisen.

Die Erfindung wird nachfolgend unter Bezugnahme auf die beigefugten Figuren anhand von Ausführungsbeispielen beschreiben. Dieselben Bauteile sind in allen Figuren mit denselben Bezugszeichen gekennzeichnet.

Es zeigen:
- Fig. 1: eine schematische Darstellung verschiedener Elektroden,
- Fig. 2: eine schematische Darstellung zweier kuhlbarer Elektroden im Querschnitt,
- Fig. 3: eine schematische Darstellung verschiedener segmentierter Elektroden, jeweils im Querschnitt,
- Fig. 4: eine schematische Darstellung einer in Bezug auf die Gefaßwand beziehungsweise den Gefaßboden verschiebbare Elektrode,
- Fig. 5: schematische Darstellungen der erfindungsgemäßen Vorrichtung in Aufsicht,
- Fig. 6: eine schematische Darstellung der erfindungsgemäßen Vorrichtung im Querschnitt in einer Schnittrichtung senkrecht zur Durchflussrichtung der Schmelze durch das Gesäß in vollständig entleertem Zustand,
- Fig. 7: eine schematische Darstellung der erfindungsgemäßen Vorrichtung im Querschnitt in einer Schnittebene senkrecht zur Durchflussrichtung der Schmelze durch das Gefäß mit Skullkruste,
- Fig. 8: eine schematische Darstellung der erfindungsgemäßen Vorrichtung im Querschnitt in einer Schnittebene senkrecht zur Durchflussrichtung der Schmelze durch das Gefäß in befülltem Zustand,
- Fig. 9: eine schematische Darstellung der erfindungsgemäßen Vorrichtung im Querschnitt in einer Schnittebene parallel zur Durchflussrichtung der Schmelze durch das Gefäß im Betrieb mit Zusatzheizung,
- Fig. 10: Detaildarstellung der Konvektionswalze in der Strömung beim Betrieb gemäß einer Anordnung wie in Figur 9 dargestellt,
- Fig. 11: eine schematische Darstellung der erfindungsgemäßen Vorrichtung gemäß einer weiteren Ausfuhrungsform im Querschnitt in einer Schnittebene parallel zur Durchflussrichtung der Schmelze durch das Gefäß mit die Strömung der Schmelze beeinflussenden Einbauten,
- Fig. 12: eine schematische Darstellung der erfindungsgemäßen Vorrichtung im Querschnitt in einer Schnittebene parallel zur Durchflussrichtung der Schmelze gemäß einer weiteren Ausfuhrungsform mit Zusatzbeheizung und die Strömung der Schmelze beeinflussenden Einbauten,
- Fig. 13: eine schematische Darstellung der erfindungsgemäßen Vorrichtung gemäß einer weiteren Ausführungsform im Querschnitt in einer Schnittebene senkrecht zur Durchflussrichtung der Schmelze durch das Gefäß im Betriebszustand wahrend des Beginns des Anfahrvorgangs,
- Fig. 14: Anordnung wie in Fig. 13 im Betriebszustand beim Beenden des Anfahrens,
- Fig. 15: eine schematische Darstellung der erfindungsgemäßen Vorrichtung gemäß einer weiteren Ausfuhrungsform im Querschnitt in einer Schnittebene senkrecht zur Durchflussrichtung der Schmelze durch das Gefäß im Betriebszustand während des Anfahrens,
- Fig. 16: Anordnung wie in Fig. 13 im Betriebszustand nach Beenden des Anfahrens,
- Fig. 17: eine schematische Darstellung der erfindungsgemäßen Vorrichtung im Querschnitt in einer Schnittebene senkrecht zur Durchflussrichtung der Schmelze durch das Gefäß zur Darstellung der Kühlung des Gefäßbodens,
- Fig. 18: eine schematische Darstellung eines Ausschnitts des Skulltiegels der erfindungsgemäßen Vorrichtung in perspektivischer Ansicht.

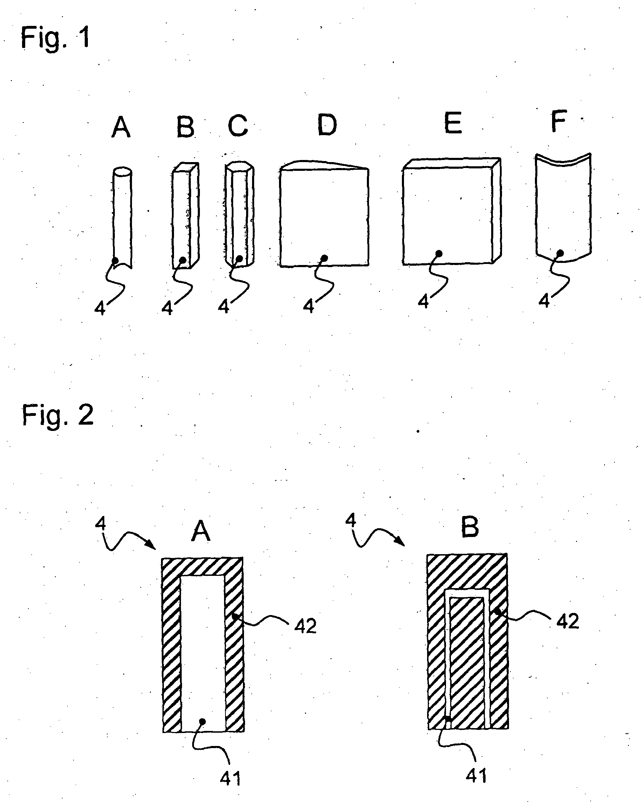

Für die Anordnung im Inneren des Gefäßes gemäß der erfindungsgemäßen Vorrichtung können unter anderem Stab- oder Plattenelektroden eingesetzt werden. In Figur 1 ist eine beispielhafte Auswahl derartiger Elektroden 4 gezeigt.

Stabelektroden können einen runden (Figur 1A), rechteckigen (Figur 1B) oder vieleckigen Querschnitt (Figur 1C) aufweisen. Auch Plattenelektroden können in ihrer Geometrie variiert werden. Beispielsweise kann insbesondere dann, wenn eine strömungsbeeinflussende Wirkung erwünscht ist, ein an die Strömung angepasstes Profil gewählt werden (Figur 1D). Ebenso ist der Einsatz einfacher Plattenelektroden mit quaderformiger Geometrie möglich (Figur 1E). Zur Beeinflussung der Strömung können unterschiedlichste Formen gewählt werden, wie beispielsweise auch eine Elektrode mit bogenförmigem Querschnitt (Figur 1F).

Unabhängig davon, welche Form und Geometrie für die Elektrode 4 gewählt wurde, können die Elektroden Öffnungen 41 in ihrem Inneren aufweisen, durch welche ein Fluid zur Kühlung der Elektrode 4 geleitet werden kann. In Figur 2 sind Beispiele für derartige Elektroden 4 gezeigt. Als Öffnung für ein Kühlfluid kann gemäß Figur 2 eine einfache Bohrung 41 im Schmelzkontaktmaterial 42 der Elektrode 4 gewählt werden. Eine weitere Möglichkeit, eine Öffnung für das Kühlfluid bereitzustellen, zeigt Figur 2 anhand eines Fluidkanals 41.

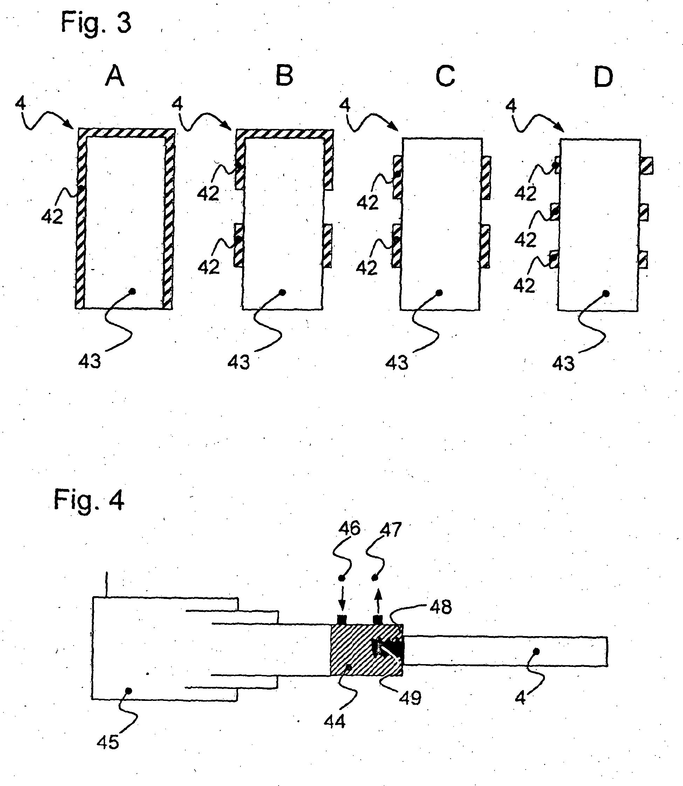

Wie in Figur 3 dargestellt, kann der Aufbau der Elektroden 4 weiter variiert werden. Figur 3 zeigt eine Elektrode 4 im Querschnitt mit einem Kern 43, welcher beispielsweise aus Keramik bestehen kann. Der Kern 43 ist mit einer Schicht aus Schmelzkontaktmaterial 42 versehen. Des Weiteren können die Elektroden eine segmentierte Bauform zur gezielten Steuerung des Stromes und damit zum Beispiel zur Beeinflussung der Konvektionswalze aufweisen. Die Figuren 3B, 3C und 3D zeigen derartige Anordnungen, wobei die Elektrode 4 einen Kern 43, welcher beispielsweise aus Keramik bestehen kann, und Segmente aufweisen, auf die das Schmelzkontaktmaterial 42 aufgebracht ist.

Insbesondere für den Einbau durch den Gefaßboden 8, jedoch auch für den Einbau durch die Seitenwandungen 10 des Gefäßes, können die Elektroden 4 verschiebbar gestaltet sein. Eine derartige Elektrodenanordnung ist in Figur 4 dargestellt. Die Elektrode 4 wird von einem Elektrodenhalter 44 aufgenommen, welcher ein Innengewinde 49 aufweist, in welches die Elektrode 4 mittels des Gewindes 48 geschraubt werden kann. Auch andere Befestigungsmöglichkeiten für die Elektrode 4 im Elektrodenhalter 44 sind denkbar. Der Elektrodenhalter 44 ist kühlbar gestaltet und weist einen Kühlmittelzulauf 46 sowie einen Kühlmittelablauf 47 auf.

Der Elektrodenhalter 44 und mit ihm die Elektrode 4 sind mit einer beispielsweise hydraulischen Verschiebevorrichtung 45 verbunden. Im in eine Wand oder den Boden des Gefäßes eingesetzten Zustand ragt die Elektrode 4 in das Innere des Gefäßes, während sich der Elektrodenhalter 44 im Bereich der Wandung 10 beziehungsweise des Bodens 8 befindet, und die Verschiebevorrichtung 45 auf der dem Gefäß abgewandten Seite der Wandung beziehungsweise des Bodens positioniert ist. Mittels der Verschiebevorrichtung 45 kann die vertikale Position der Elektrode 4 in Bezug auf den Gefaßboden 8 beziehungsweise die Lange der in das Innere des Gefäßes hineinragenden Elektrode 4, bei der Anordnung in der Gefäßwandung 10 zu jedem gewünschten Zeitpunkt eingestellt werden.

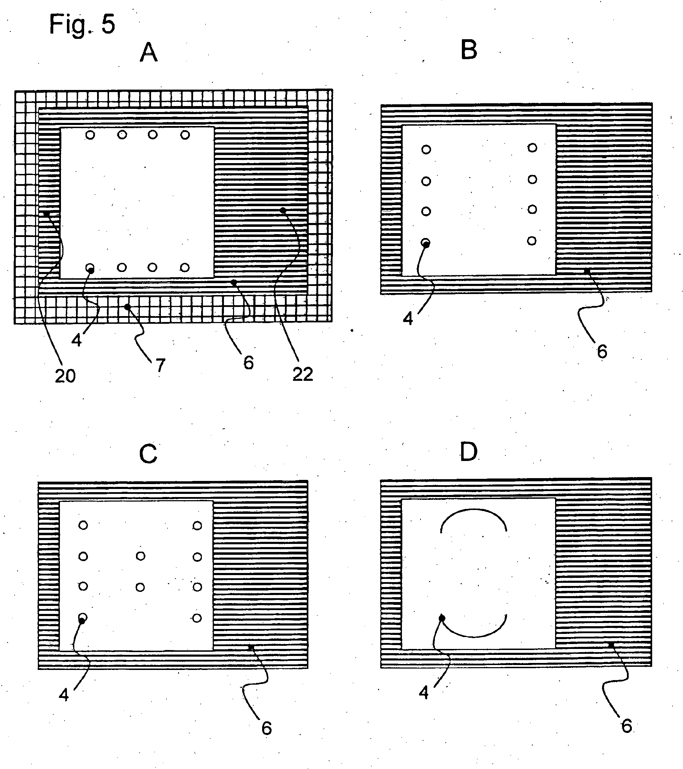

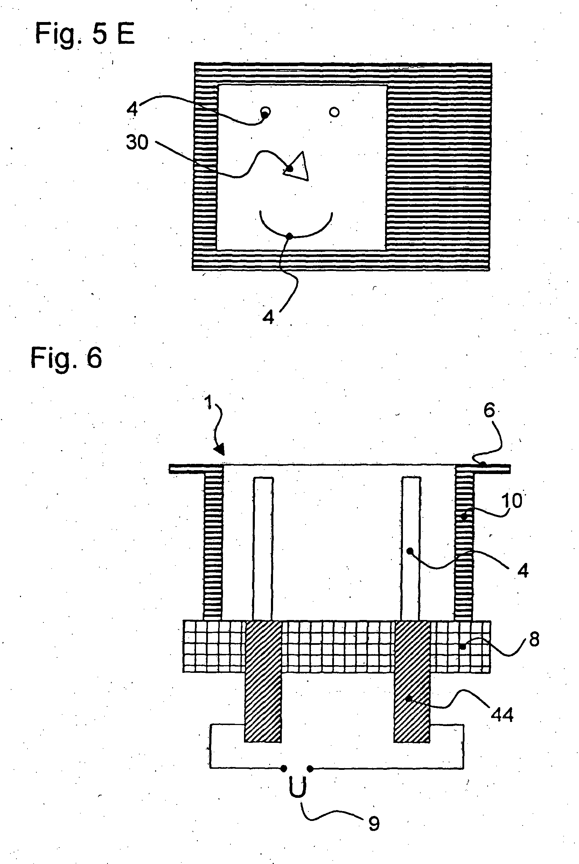

Eine Aufsicht auf das Gefäß mit verschieden darin angeordneten Elektroden ist in Figur 5 in den Abbildungen A bis D gezeigt. In Figur 5E ist eine Anordnung dargestellt, welche zusatzlich weitere strömungsbeeinflussende Einbauten 30 aufweist. Figur 5A zeigt Elektroden 4, welche in zwei Reihen nebeneinander angeordnet sind. Die Reihen sind parallel zu der vom Zulauf 20 durch das Gefäß 2 zum Ablauf 22 gerichteten Durchflussrichtung der Schmelze angeordnet. Zulauf und Ablauf der Seitenwände 10 des Gefäßes 2 sind derart gewinkelt gestaltet, dass der abgeknickte Teil vom Gefäß 2 weg gerichtet ist und so einen Kragen 6 bildet. Im Anschluss an den Kragen ist die Umgebung 7 der Vorrichtung in Figur 5A zur Orientierung mit dargestellt.

In Figur 5B ist eine weitere Ausführungsform der Vorrichtung gezeigt mit Elektroden 4, die in zwei Reihen relativ zum Kragen 6 des Gefäßes 2 angeordnet sind, wobei sich die Reihen senkrecht zur Strömungsrichtung durch das Gefäß 2 erstrecken. Wie in Figur 5C dargestellt ist, können weitere Elektroden 4 im Inneren des Gefäßes 2 verteilt werden, so dass beispielsweise eine Anordnung realisiert werden kann, welche als statischer Mischer auf das zu schmelzende Material wirkt. Die Elektroden 4 können auch durch besondere Formgebung die Strömung der Schmelze durch das Gefäß 2 gezielt beeinflussen.

Wie in Figur 5D gezeigt ist, kann aus Elektroden 4 mit bogenformigem Querschnitt ein Ringsegment realisiert werden. Derartige Elektroden 4 mit bogenformigem Querschnitt können jedoch auch, wie in Figur 5E gezeigt, mit anderen Elektroden, hier mit Stabelektroden mit rundem Querschnitt kombiniert eingesetzt werden. Zusatzlich zu den Elektroden 4 können die stromungsbeeinflussenden Einbauten 30 im Gefäß 2 angeordnet werden.

Figur 6 zeigt die erfindungsgemäße Vorrichtung 1 in völlig entleertem Zustand. Auf den Boden 8 des Gefäßes 2 ist die Wand 10 des Gefäßes 2 aufgesetzt, wodurch ein Skulltiegel aufgebaut wird. Durch den Boden 8 sind Elektrodenhalter 44 und an diese angeschlossen Elektroden 4 derart eingesetzt, dass die Elektroden 4 im Inneren des Gefäßes angeordnet werden. Die Wände des Gefäßes sind L-formig abgewinkelt, wodurch ein Kragen 6 gebildet wird. Über die Elektrodenhalter 44 stehen die Elektroden 4 mit der Stromversorgung 9 in Kontakt.

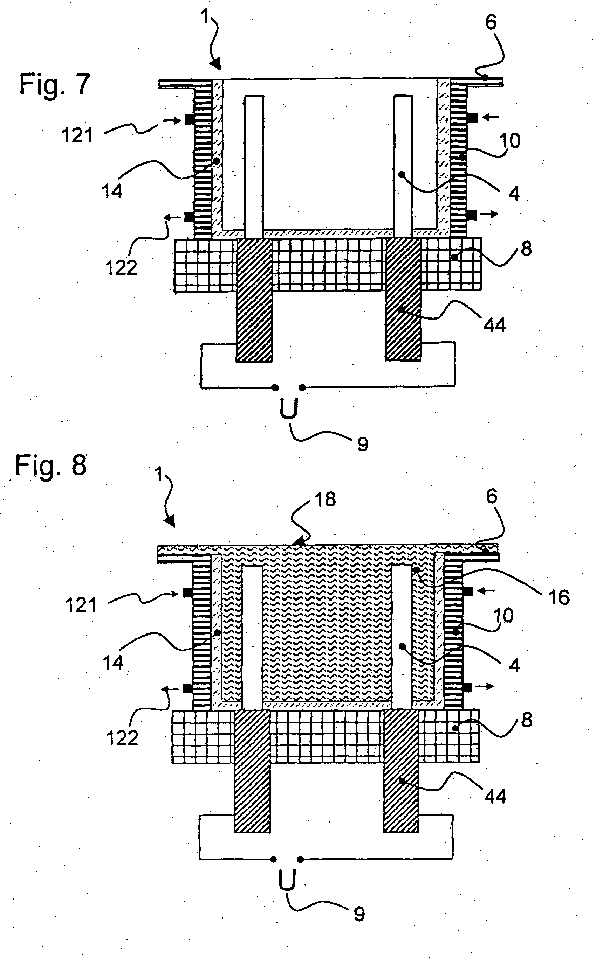

Wird die erfindungsgemäße Vorrichtung wie vorgesehen als Skulltiegel betrieben, bildet sich eine Skullkruste aus. Eine Anordnung der Vorrichtung mit dieser Skullkruste 14 ist in Figur 7 gezeigt. In der Vorrichtung 1 zur Temperaturbeeinflussung der Schmelze bildet sich im Innern an der Gefaßwand 10 eine Skullkruste, nämlich eine Schicht aus erstarrter Schmelze 14 aus, weil die Gefaßwand 10 so stark gekühlt ist, dass das Schmelzgut aus dem Inneren des Gefäßes an der Wand 10 erstarrt. Eine Kühlung der Gefaßwand kann durch Durchleiten von Kühlmitteln durch die Rohre des Skulltiegels erfolgen. So weist die Vorrichtung 1 entsprechende Stutzen für den Kühlmittelzulauf 121 beziehungsweise den Kühlmittelablauf 122 auf. Wie in Figur 8 gezeigt, steht im Betrieb der erfindungsgemäßen Vorrichtung 1 die Schmelze 16 nicht mit der Gefäßwandung 10 des Skulltiegels in Kontakt, weil dazwischen die erstarrte Schmelze 14 als Skullkruste ausgebildet ist.

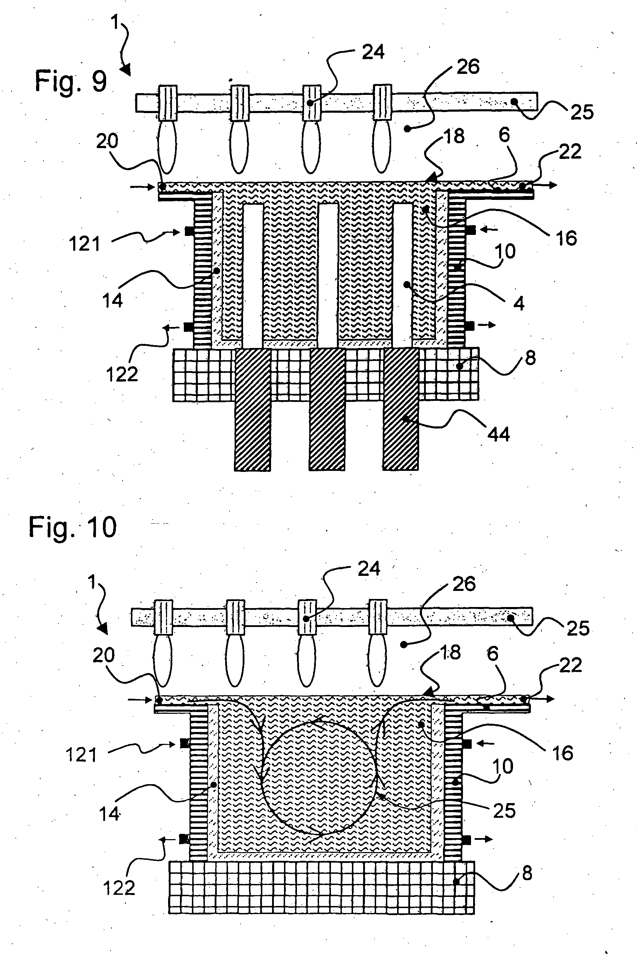

Über der Oberflache des Schmelzbades 18 befindet sich der Oberofenbereich 26. Um ein Abkühlen der Schmelze 16 an der Schmelzbadoberfläche 18 verringern beziehungsweise vermeiden zu können, kann es sinnvoll sein, die Vorrichtung 1 mit einer Zusatzbeheizung zu betreiben. Gemäß dem in Fig. 9 dargestellten Ausführungsbeispiel wird dazu eine Anordnung von Gasbrennern 24 bereitgestellt, welche beispielsweise in einem Tragegestell 25 angeordnet werden können, so dass mittels der Gasbrenner 24 der Oberofenbereich 26 beheizt werden kann.

In Figur 10 ist im Detail die sich dann einstellende Konvektionswalze 28 gezeigt. Das Schmelzgut tritt über den Zulauf 20 in das Gefäß 2 ein. Aufgrund der Kühlung der Wand des Skulltiegels 10 erstarrt die Schmelze in Form der Skullkruste 14. Das eintretende Schmelzgut trifft nach dem passieren des Zulaufs auf einen sehr kalten Bereich, wenn es den Zulauf 20 verlasst, und stürzt nach unten ins Innere des Gefäßes 2 hinab. Im Inneren des Gefäßes 2 erfolgt die Beheizung mittels der ohmschen Widerstandsbeheizung durch die in Figur 10 nicht dargestellten Elektroden. Die Schmelze 16 erwärmt sich und steigt daher im Gefäß 2 nach oben. Wurde die Temperaturverteilung im Gefäß 2 entsprechend eingestellt, lauft die Konvektionswalze 28 stationär. Auf besonders hohe Temperaturen aufgeheizte Fluidelemente verlassen über den Auflauf 22, welcher im Verhältnis zum Zulauf 20 mit einer großeren Länge versehen ist, um als Kühlstrecke dienen zu können, das Gefäß 2.

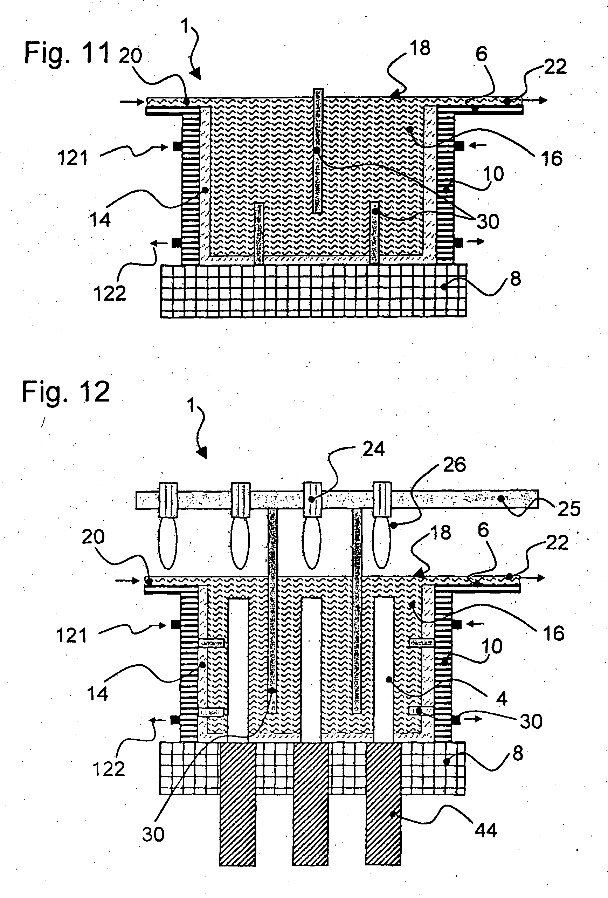

Zum Einstellen der Temperaturverteilung sowie auch der Verweilzeitverteilung im Inneren des Gefäßes 2 über die Einstellung des Stromungsprofils können die Strömung beeinflussende Einbauten 30 im Inneren des Gefäßes 2 angeordnet werden. Eine Möglichkeit für eine derartige Anordnung zeigt die vereinfachte Darstellung in Figur 11, wo der Übersichtlichkeit halber auf die Darstellung der Elektroden verzichtet wurde.

Figur 12 zeigt eine andere Ausfuhrungsform der Vorrichtung 1, welche hier mit Zusatzbeheizung im Oberofenraum 26 über Gasbrenner 24 betrieben wird, die in einem Tragegestell 25 angeordnet sind, wobei das Tragegestell 25 auch als Aufhangung für strömungsbeeinflussende Einbauten 30 dient, die von oben in die Schmelze getaucht werden. Zusatzlich können strömungsbeeinflussende Einbauten 30 auch an den Seitenwänden 10 des Gefäßes 2 vorgesehen sein.

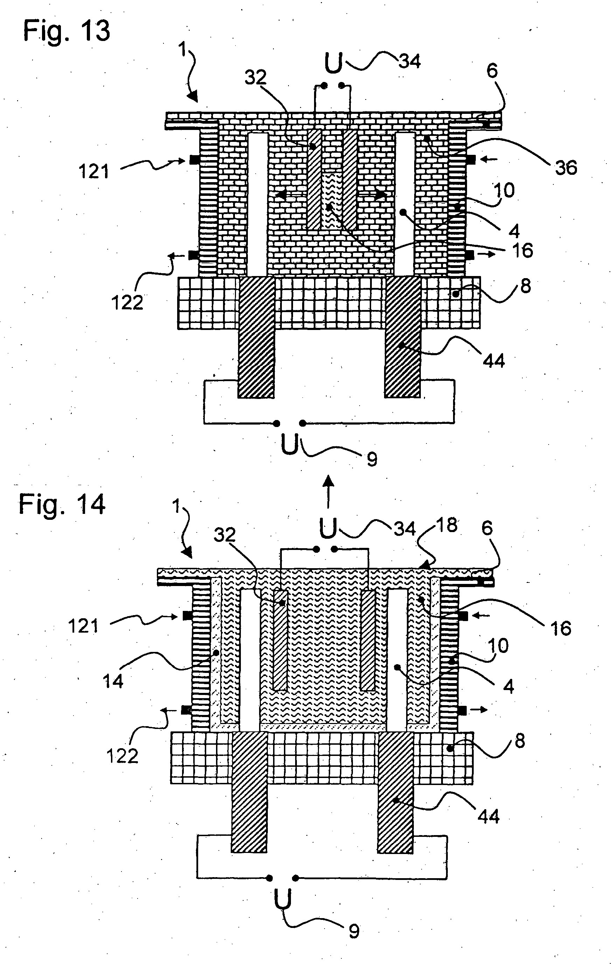

Zum Anfahren der Vorrichtung 1 können Startelektroden 32 eingesetzt werden. In Figur 13 ist eine Ausfuhrungsform der Vorrichtung 1 während des Anfahrens dargestellt. Startelektroden 32 sind in das noch feste Schmelzgut 36 eingebracht und mit einen geringen Abstand zueinander angeordnet. Sie verfugen über eine Stromversorgung 34. Zwischen den Startelektroden 32 bildet sich ein Bereich erschmolzenen Schmelzgutes 16. Während des Anfahrvorgangs werden die Startelektroden, wie in Figur 13 durch Pfeile angedeutet ist, auseinandergezogen. Die Startelektroden 32 können auch beheizt sein, um den Anfahrvorgang zu erleichtern.

Figur 14 zeigt den Anfahrvorgang in einem spateren Stadium, in welchem die Startelektroden 32 bereits weit auseinandergezogen sind und das Schmelzgut 16 verflüssigt ist. Nun können die Startelektroden 32, wie durch den nach oben gerichteten Pfeil angedeutet, wieder entfernt werden. Auch über durch die Seitenwände einbringbare Elektroden kann der Anfahrvorgang verbessert werden.

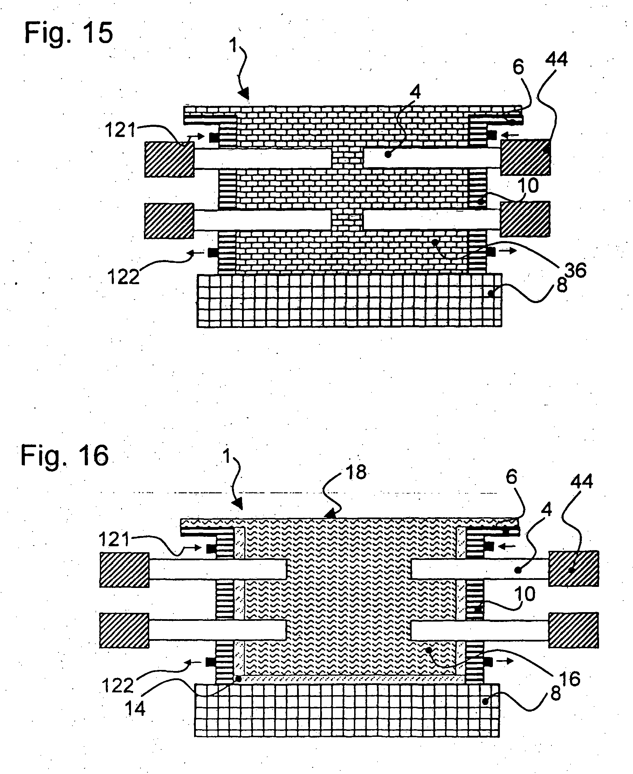

Figur 15 zeigt eine entsprechende Ausführungsform der Erfindung. Durch die Seitenwände 10 sind Elektroden 4 derart im Inneren des Gefäßes 2 angeordnet, dass ihr Abstand sehr gering ist. Während des Anfahrens schmilzt zunehmend mehr des zu Beginn noch festen Schmelzgutes 36, und die Elektroden 4 können auf immer größere Abstande voneinander auseinandergezogen werden. Eine entsprechend Situation ist in Figur 16 gezeigt.

Um den Boden 8 des Skulltiegels vor hohen Temperaturbelastungen und Korrosion zu schützen, wird dieser in der erfindungsgemäßen Vorrichtung 1 gekühlt.

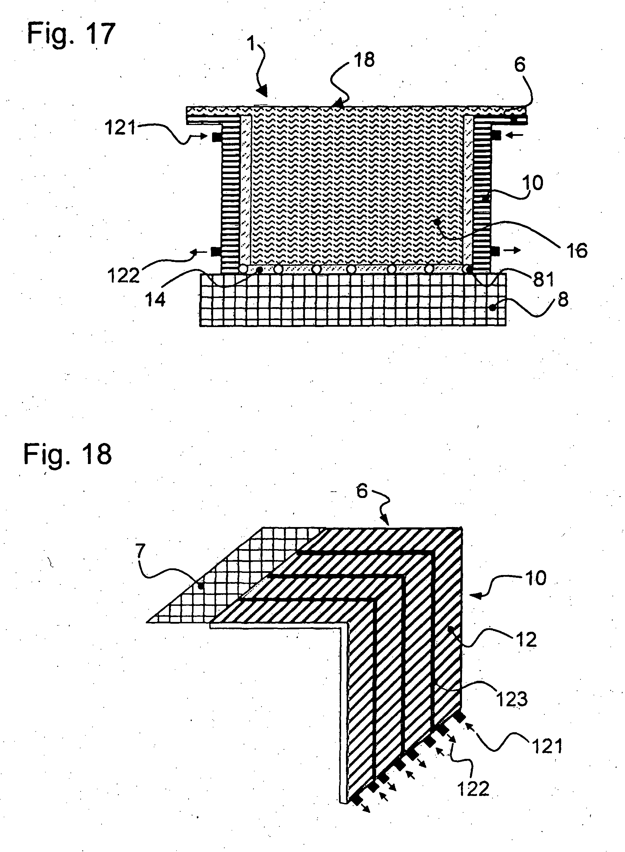

In Figur 17 ist in der vereinfachten Darstellung der Vorrichtung 1 die Kühlung des Gefäßbodens durch auf der Bodenplatte 8 aufliegende Rohre 81 gezeigt. Die Skullkruste 14 bildet sich entsprechend um die Rohre 81 herum beziehungsweise kann derart in das Innere des Gefäßes hinein anwachsen, dass die Kuhlrohre 81 auf dem Gefäßboden von der Skullkruste 14 umschlossen werden.

In Figur 18 ist ein Ausschnitt eines aus Modulen aufgebauten Skulltiegels gezeigt. Im Anschluss an die Umgebung 7 sind aneinander gereihte Module vorgesehen. Die Module bestehen aus Rohren 12, wobei mehrere Rohre 12 zusammen zu einem Wandelement verbunden sind, welches mit der bereits eingeführten Querschraffur der Wand 10 gekennzeichnet ist. Die Rohre 12 selbst stehen in Verbindung mit dem Kuhlmittelzulauf 121 und dem Kühlmittelablauf 122 eines Elements der Wand 10. Zwischen den Modulen ist eine Isolierung 123 eingebracht, um den elektrischen Kontakt der insbesondere aus Metallrohren gefertigten Wandelemente zu unterbinden.

Weil mit der erfindungsgemäßen Vorrichtung mit der Anordnung von Elektroden im Inneren eines Skulltiegels besonders hohe Temperaturen der Schmelze realisiert werden können, ermöglicht die Erfindung das Läutern auch schwierig zu behandelnder Gläser wie beispielsweise eines Display-Glases. Zum Behandeln des Display Glases kann die Vorrichtung insbesondere derart betrieben werden, dass die mittlere Aufenthaltszeit einen bestimmten Wert nicht unterschreitet Hieraus ergeben sich entsprechende Verhältnisse der Werte für das Volumen des Gefäßes und den Durchsatz. Ausschlaggebend sind dabei insbesondere auch die glasartabhänige Viskosität und der Volumenausdehnungskoeffizient.

**Bezugszeichenliste:**

| | | |
|---|---|---|
| 1 | Vorrichtung zur Temperaturbeeinflussung einer Schmelze | |
| 2 | Gefäß | |
| 4 | Elektrode | |
| | 41 | Fluidkanal |
| | 42 | Schmelzkontaktmaterial |
| | 43 | Kern |
| | 44 | Elektrodenhalter |
| | 45 | hydraulische Verschiebevorrichtung |
| | 46 | Kühlmittelzulauf |
| | 47 | Kühlmittelablauf |
| | 48 | Gewinde , |
| | 49 | Gewindebohrung |
| 6 | Kragen des Gefäßes | |
| 7 | Umgebung des Gefäßes | |
| 8 | Boden des Gefäßes | |
| | 81 | Kühlung des Gefäßbodens |
| 9 | Stromversorgung für Elektroden | |
| 10 | Wand des Gefäßes | |
| 12 | Rohre des Skulltiegels | |
| | 121 | Kühlmittelzulauf |
| | 122 | Kühlmittelablauf |
| | 123 | Isolierung der Skullsegmente |
| 14 | erstarrte Schmelze | |
| 16 | Schmelze | |
| 18 | Schmelzbadoberfläche | |
| 20 | Zulauf | |
| 22 | Ablauf | |
| 24 | Gasbrenner | |
| 25 | Tragegestell für Heizeinrichtungen | |
| 26 | Oberofenbereich | |
| 28 | Konvektionswalze | |
| 30 | strömungsbeeinflussende Einbauten | |
| 32 | Startelektroden | |
| 34 | Stromversorgung für Startelektroden | |
| 36 | Schmelzgut | |

## Patentansprüche

1. Verfahren zum Läutern von Glasschmelzen (16) in einem Gefäß (2) mit einem Innenraum, wobei
die Schmelze (16) zumindest mittels ohmscher Widerstandsbeheizung über zumindest zwei in der Schmelze (16) angeordnete Elektroden (4), die in den Innenraum des Gefäßes (2) hineinragen, beheizt wird und
Seitenwände (10) des Gefäßes (2) gekühlt werden, so dass die gesamten Seitenwänden (10) mit einer Skullschicht bedeckt sind und zumindest ein Teil der Schmelze (16) gekühlt wird, wobei die Elektroden (4) im wesentlichen keinen direkten Kontakt mit den Seitenwänden (10) des Gefäßes (2) haben und
der Abstand zwischen den Elektroden (4) und metallischen Bauteilen in dem Bereich, in welchem die Elektroden (4) Temperaturen von mindestens 1600 °C aufweisen, mindestens 1 cm beträgt, und
die Temperatur der Schmelze (16) in zumindest einem Bereich auf mindestens 1700 °C aufgeheizt wird und
eine Konvektionsströmung (28) durch Einstellen einer Temperaturdifferenz der Schmelze (16) zwischen einem inneren und einem äußeren Bereich erzeugt wird.

2. Verfahren nach Anspruch 1, **dadurch gekennzeichnet, daß** die Schmelze (16) mit Wechselstrom, bevorzugt mit einer Wechselstromfrequenz in einem Frequenzbereich von etwa 5 Hz bis etwa 1 MHz, bevorzugt von etwa 1 kHz bis etwa 100 khz, besonders bevorzugt bei etwa 10 kHz beheizt wird.

3. Verfahren nach einem der vorstehenden Ansprüche,
**dadurch gekennzeichnet, daß**
die elektrische Leitfähigkeit der Schmelze (16) bei der Schmelztemperatur in einem Bereich von etwa 10⁻⁵ bis etwa 10⁴ Ω⁻¹ * cm⁻¹, bevorzugt von etwa 10⁻² bis etwa 10¹ Ω⁻¹ * cm⁻¹ aufweist.

4. Verfahren zum Läutern von Schmelzen (16) nach einem der vorstehenden Ansprüche, wobei die Elektroden (4) Iridium umfassen.

5. Vorrichtung (1) zum Läutern einer Glasschmelze (16), umfassend:
eine zumindest einen Innenraum definierende Anordnung, insbesondere ein Gefäß (2), mit Seitenwänden (10) zur Aufnahme und zum Läutern der Schmelze (16),
wobei die Seitenwände (10) kühlbar sind zum Bedecken der Seitenwände (10) mit einer Skullschicht, und
zumindest zwei Iridium umfassende Elektroden (4) zur ohmschen Widerstandsbeheizung der Schmelze (16), die in den Innenraum der Anordnung, insbesondere des Gefäßes (2) hineinragen,
wobei die Elektroden (4) im wesentlichen keinen direkten Kontakt mit den Seitenwänden (10) der den Innenraum definierende Anordnung, insbesondere des Gefäßes (2), haben und
der Abstand zwischen den Elektroden (4) und metallischen Bauteilen in dem Bereich, in welchem die Elektroden (4) im Betrieb Temperaturen von mindestens 1600 °C aufweisen, mindestens 1 cm beträgt, und
die Schmelze (16) in zumindest einem Bereich auf mindestens 1700 °C aufheizbar ist.

6. Vorrichtung (1) nach einem der vorstehenden Ansprüche,
**dadurch gekennzeichnet, daß**
die Elektroden (4) Platten- und/ oder Knopf- und/oder Kugel- und/oder Stabelektroden und/oder Rogowski-Elektroden und/oder hammerförmige Elektroden umfassen.

7. Vorrichtung (1) nach einem der vorstehenden Ansprüche, **dadurch gekennzeichnet, daß** das Gefäß (2) Skullwände und/oder Keramikwände umfasst.

8. Vorrichtung (1) nach Anspruch 7, **dadurch gekennzeichnet, daß** das Gefäß (2) Skullwände aufweist, welche vorzugsweise metallische Rohre umfassen, welche auf der der Schmelze (16) zugewandten Seite mit einem elektrisch schlecht leitenden Material, vorzugsweise in Form von Keramikplatten oder Schlicker, insbesondere SiO₂-Schlicker ausgekleidet sind.

9. Vorrichtung (1) nach einem der vorstehenden Ansprüche, **gekennzeichnet durch** eine Einrichtung (9) zur Erzeugung von Wechselstrom, bevorzugt mit einer Wechselstromfrequenz in einem Bereich von etwa 5 Hz bis etwa 1 MHZ, bevorzugt von etwa 1 kHz bis etwa 100 kHz, besonders bevorzugt bei einer Wechselstromfrequenz von etwa 10 kHz.

10. Vorrichtung (1) nach einem der vorstehenden Ansprüche, **dadurch gekennzeichnet, daß** eine Zusatzheizung zumindest eine Strahlungsbeheizung und/oder eine Mikrowellenbeheizung und/oder eine Plasmabrennerbeheizung umfasst.

11. Vorrichtung (1) nach einem der vorstehenden Ansprüche, **dadurch gekennzeichnet, daß** der Boden (8) des Gefäßes (2) zumindes ein Feuerfestmaterial umfasst, welches eine elektrische Leitfähigkeit von kleiner 1/30 Ω⁻¹ * cm⁻¹ bei 1600 °C aufweist.

## Claims

1. Method of refining glass melts (16) in a vessel (2) having an inner chamber, wherein
the melt (16) is heated at least by ohmic resistance heating by means of at least two electrodes (4) disposed in the melt (16), which electrodes protrude into the inner chamber of the vessel (2) and
side walls (10) of the vessel (2) are cooled so that the entire side walls (10) are covered with a skull layer and at least a part of the melt (16) is cooled, wherein the electrodes (4) essentially have no direct contact with the side walls (10) of the vessel (2) and
the distance between the electrodes (4) and metallic components in the region in which the electrodes (4) are at temperatures of at least 1600°C, is at least 1 cm, and
the temperature of the melt (16) is raised in at least one region to at least 1700°C and a convection current (28) is generated by setting a temperature difference in the melt (16) between an internal and an external region.

2. Method as claimed in claim 1, **characterised in that** the melt (16) is heated with alternating current, preferably with an alternating current frequency in a frequency range from about 5 Hz to about 1 MHz, preferably from about 1 kHz to about 100 kHz, particularly preferably at about 10 kHz.

3. Method as claimed in any one of the preceding claims, **characterised in that** the electrical conductivity of the melt (16) at the melting temperature is in a range from about 10⁻⁵ to about 10⁴ Ω⁻¹ * cm⁻¹, preferably from about 10⁻² to about 10¹ Ω⁻¹ * cm⁻¹.

4. Method of refining melts (16) as claimed in any one of the preceding claims, wherein the electrodes (4) include iridium.

5. Apparatus (1) for refining a glass melt (16) comprising:
an arrangement, in particular a vessel (2), defining at least one inner chamber and having side walls (10) to receive and refine the melt (16),
wherein the side walls (10) can be cooled in order to cover the side walls (10) with a skull layer, and
at least two iridium-containing electrodes (4) for ohmic resistance heating of the melt (16) which protrude into the inner chamber of the arrangement, in particular of the vessel (2),
wherein the electrodes (4) essentially have no direct contact with the side walls (10) of the arrangement defining the inner chamber, in particular of the vessel (2), and
the distance between the electrodes (4) and metallic components in the region in which the electrodes (4) are at temperatures of at least 1600°C during operation, is at least 1 cm, and
the melt (16) can be heated to at least 1700°C in at least one region.

6. Apparatus (1) as claimed in any one of the preceding claims, **characterised in that** the electrodes (4) include plate and/or button and/or spherical and/or bar electrodes and/or Rogowski electrodes and/or hammer-shaped electrodes.

7. Apparatus (1) as claimed in any one of the preceding claims, **characterised in that** the vessel (2) has skull walls and/or ceramic walls.

8. Apparatus (1) as claimed in claim 7, **characterised in that** the vessel (2) has skull walls which preferably include metallic tubes which are lined on the side facing the melt (16) with a material of poor electric conductivity, preferably in the form of ceramic plates or slip, in particular SiO₂ slip.

9. Apparatus (1) as claimed in any one of the preceding claims, **characterised by** a device (9) for generating alternating current, preferably with an alternating current frequency in a range from about 5 Hz to about 1 MHz, preferably from about 1 kHz to about 100 kHz, particularly preferably at an alternating current frequency of about 10 kHz.

10. Apparatus (1) as claimed in any one of the preceding claims, **characterised in that** additional heating includes at least radiant heating and/or microwave heating and/or plasma torch heating.

11. Apparatus (1) as claimed in any one of the preceding claims, **characterised in that** the floor (8) of the vessel (2) includes at least one refractory material which has an electrical conductivity of less than 1/30 Ω⁻¹ * cm⁻¹ at 1600°C.

## Revendications

1. Procédé d'affinage de fontes de verre (16) dans une cuve (2) avec un espace intérieur, dans lequel :
la fonte (16) est chauffée au moins par chauffage à résistance ohmique au moyen d'au moins deux électrodes (4) disposées dans la fonte (16) et pénétrant à l'intérieur de la cuve (2), et
des parois latérales (10) de la cuve (2) sont refroidies de telle manière que l'ensemble des parois latérales (10) sont recouvertes d'une croûte refroidie, et qu'au moins une partie de la fonte (16) est refroidie, les électrodes (4) n'ayant sensiblement aucun contact direct avec les parois latérales (10) de la cuve (2), et
l'espacement entre les électrodes (4) et les composants métalliques dans la zone où les électrodes (4) présentent des températures d'au moins 1600°C, est d'au moins 1 cm, et
la température de la fonte (16) dans au moins une zone est élevée à au moins 1700°C, et
un flux de convection (28) est généré par réglage d'un différentiel de température de la fonte (16) entre une zone intérieure et une zone extérieure.

2. Procédé selon la revendication 1, **caractérisé en ce que** la fonte (16) est chauffée par courant alternatif, de préférence avec une fréquence de courant alternatif comprise dans une plage de fréquence de 5 Hz environ à 1 MHz environ, de préférence de 1 kHz environ à 100 kHz environ, et tout particulièrement avec une fréquence de 10 kHz environ.

3. Procédé selon l'une des revendications précédentes, **caractérisé en ce que** :
la conductivité électrique de la fonte (16) à température de fusion est comprise dans une plage de 10⁻⁵ à 10⁴ Ω⁻¹ * cm⁻¹ environ, de préférence de 10⁻² à 10¹ Ω⁻¹ * cm⁻¹ environ.

4. Procédé d'affinage de fontes de verre (16) selon l'une des revendications précédentes, **caractérisé en ce que** les électrodes (4) contiennent de l'iridium.

5. Dispositif (1) destiné à l'affinage de fontes de verre (16), comprenant :
un agencement définissant au moins un espace intérieur, en particulier une cuve (2), avec des parois latérales (10) pour la réception et l'affinage de la fonte (16),
les parois latérales (10) pouvant être refroidies pour recouvrir les parois latérales (10) d'une croûte refroidie, et
au moins deux électrodes (4) contenant de l'iridium pour le chauffage à résistance ohmique de la fonte (16), lesquelles pénètrent à l'intérieur de l'agencement, en particulier de la cuve (2),
les électrodes (4) n'ayant sensiblement aucun contact direct avec les parois latérales (10) de l'agencement définissant l'espace intérieur, en particulier de la cuve (2), et
l'espacement entre les électrodes (4) et les composants métalliques dans la zone où les électrodes (4) présentent en service des températures d'au moins 1600°C, est d'au moins 1 cm, et
la fonte (16) pouvant être chauffée à au moins 1700°C dans au moins une zone.

6. Dispositif (1) selon l'une des revendications précédentes, **caractérisé en ce que** :
les électrodes (4) comprennent des électrodes à plaque et/ou à bouton et/ou à bille et/ou des électrodes bâton et/ou des électrodes de Rogowski et/ou des électrodes en forme de marteau.

7. Dispositif (1) selon l'une des revendications précédentes, **caractérisé en ce que** la cuve (2) comporte des parois à croûte refroidie et/ou des parois en céramique.

8. Dispositif (1) selon la revendication 7, **caractérisé en ce que** la cuve (2) comporte des parois à croûte refroidie comprenant de préférence des tubes métalliques revêtus sur le côté opposé à la fonte (16) d'un matériau mauvais conducteur électrique, de préférence sous la forme de plaques en céramique ou de barbotine, en particulier de barbotine de SiO₂.

9. Dispositif (1) selon l'une des revendications précédentes, **caractérisé par** une installation (9) pour la génération de courant alternatif, de préférence avec une fréquence de courant alternatif comprise dans une plage de fréquence de 5 Hz environ à 1 MHz environ, de préférence de 1 kHz environ à 100 kHz environ, et tout particulièrement avec une fréquence de 10 kHz environ.

10. Dispositif (1) selon l'une des revendications précédentes, **caractérise en ce qu'**un chauffage complémentaire comprend au moins un chauffage par rayonnement et/ou un chauffage par micro-ondes et/ou un chauffage à brûleurs de plasma.

11. Dispositif (1) selon l'une des revendications précédentes, **caractérisé en ce que** le fond (8) de la cuve (2) comporte au moins un matériau réfractaire présentant une conductivité électrique inférieure à 1/30 Ω⁻¹ * cm⁻¹ à 1600°C.
